# EUROPEAN PATENT SPECIFICATION

(11) **EP 1 781 149 B1**
(45) Date of publication and mention of the grant of the patent: **26.09.2007**
(21) Application number: 04745217.2
(22) Date of filing: 20.07.2004
(51) Int. Cl.: A47J 31/30

(54) **EQUIPMENT FOR THE PREPARATION OF A HOT BEVERAGE**
AUSRÜSTUNG ZUR ZUBEREITUNG EINES HEISSGETRÄNKS
EQUIPEMENT POUR LA PREPARATION D'UNE BOISSON CHAUDE

(43) Date of publication of application: 09.05.2007
(73) Proprietor: BIALETTI INDUSTRIE S.P.A., 25030 Coccaglio (Brescia) (IT)
(72) Inventor: RANZONI, Francesco, I-25030 Coccaglio (Brescia) (IT)
(74) Representative: Leihkauf, Steffen Falk
(86) International application number: PCT/IT2004/000394
(87) International publication number: WO 2006/008764

(56) References cited:
- EP-A- 1 093 746
- WO-A-98/17160

## Description

This invention relates to equipment for the preparation of a hot beverage.

According to further aspects, this invention relates to methods for the preparation of some types of hot beverages.

This invention relates in particular to the field of equipment for the production of a coffee infusion conventionally known as a coffee-maker or cafetière.

Coffee-makers which make it possible to provide a coffee infusion by conventional means are known. Coffee-makers which make it possible to provide a frothy coffee infusion are also known.

Coffee-makers of the known type do not offer great versatility in use which renders them suitable for easily obtaining a wide range of hot beverages such as cappuccinos, lattes and others.

Attempts to achieve this have not been successful from the industrial or commercial points of view because of difficulties in manufacture and use, and the complexity of the equipment and therefore its corresponding cost.

The object of this invention is to devise and provide equipment and valve means for preparing a hot beverage which make it possible to satisfy the above requirement and at the same time make it possible to overcome the disadvantages which have been mentioned above with respect to the known art. A further object of this invention is to devise and provide methods for preparing various types of hot beverages using equipment of the coffee-maker or cafetiere type.

In particular the object of this invention is to provide equipment which is extremely versatile and simple to make and use.

This object is accomplished through equipment according to claim 1. The dependent claims relate to advantageous embodiments of the equipment.

Other advantages and characteristics of the equipment, the valve means and methods according to the invention will become clear from the following detailed description which is given with reference to embodiments provided in the appended drawings which are provided purely by way of non-limiting example and in which:

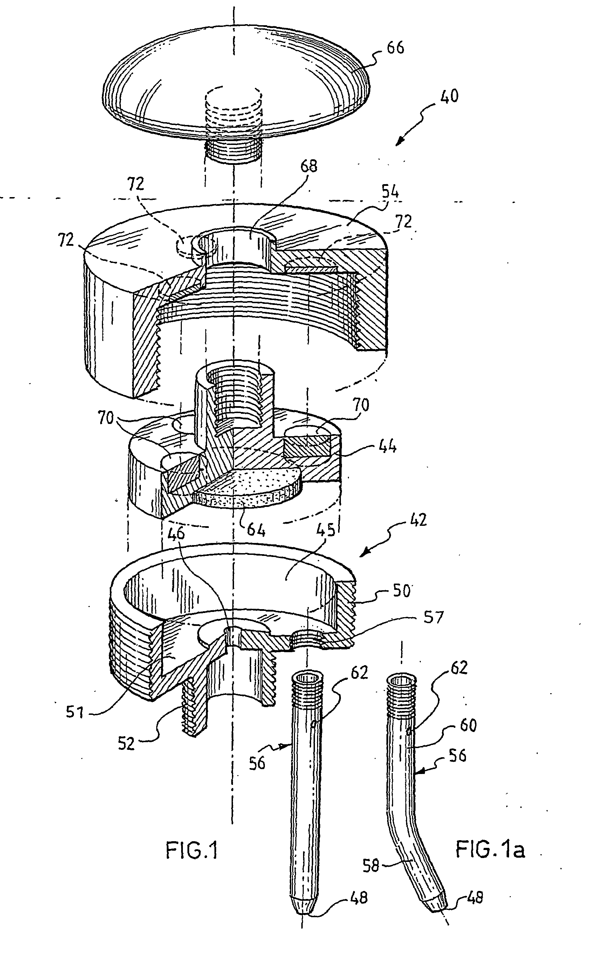

Figure 1 illustrates a perspective exploded view in partial cross-section of valve means suitable for use in equipment for the preparation of a hot beverage according to this invention,

Figure la illustrates a possible variant of the embodiment in Figure 1,

Figures 2, 3 and 3a illustrate a longitudinal cross-section through equipment for the production of a hot beverage under different operating conditions,

Figure 2a illustrates an enlarged detail of Figure 2,

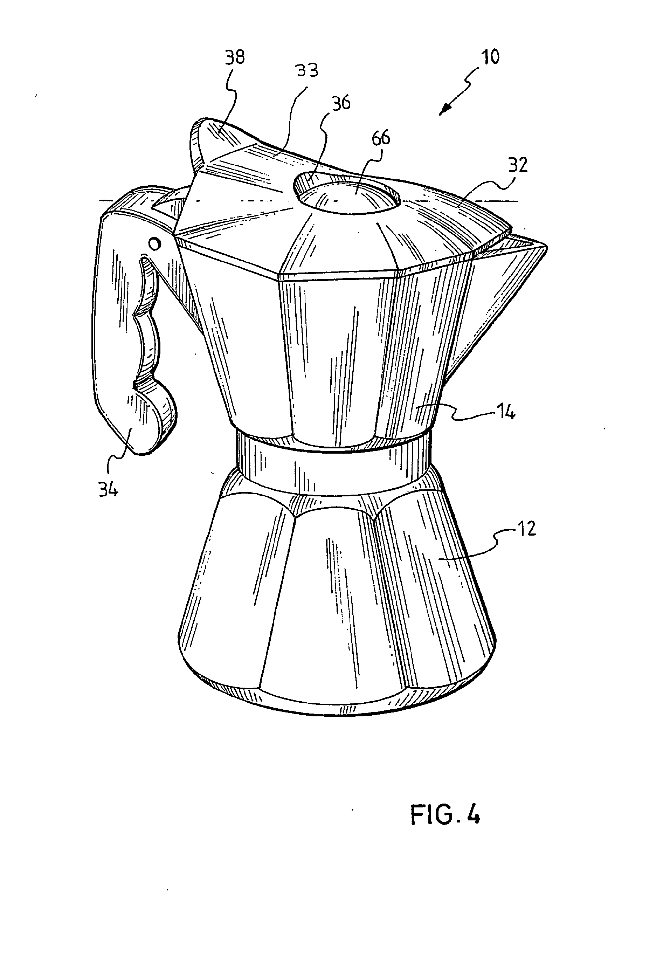

Figure 4 illustrates a perspective view of equipment for the production of a hot beverage according to a possible embodiment,

Figure 5 illustrates an exploded view of a possible embodiment of valve means suitable for use in equipment for the preparation of a hot beverage,

Figure 6 illustrates a cross-sectional view of some details of the valve means in Figure 5,

Figures 7 and 8 illustrate respectively a side view and a perspective view of a possible embodiment of the valve means in Figure 5,

Figure 9 illustrates a diagrammatical perspective view of a portion of equipment according to this invention provided with valve means according to Figures 7 and 8.

With reference to the above figures, 10 indicates as a whole equipment for the preparation of a hot beverage. According to a possible embodiment the hot beverage may comprise at least one first liquid component and one second preferably liquid component which is miscible with the first component.

The equipment to which this invention relates belongs to the sector of cafetières, more commonly known as coffee-makers, but is more versatile and reliable than known coffee-makers in that it makes it possible to obtain a wide range of beverages among which it is possible to mention, purely by way of example, cappuccino, latte, foamy or non-foamy coffee and foamy hot milk.

In the description which follows particular reference will be made to use of the equipment to prepare a cappuccino or a hot beverage comprising milk and coffee infusion and characterised by the presence of milk foam which renders it particularly pleasant. In this case the first liquid component comprises water and the second component comprises milk in liquid form. Obviously the equipment according to the invention is in any event capable of preparing a wide range of hot beverages, not exclusively cappuccino, as will be illustrated below by way of example.

With reference to the various embodiments illustrated, common functional elements are indicated by the same reference numbers.

Equipment 10 comprises a boiler 12 suitable for holding the first liquid component of the beverage. In the specific instance in which it is desired to obtain cappuccino, the first liquid component for example comprises water. A collection container 14 is located above boiler 12, preferably screwed thereto. According to a possible embodiment collection container 14 can contain the second component of the beverage, if specified. In the specific case in which the beverage being prepared is cappuccino, the second component of the beverage comprises for example milk in liquid form.

According to a possible embodiment, a reference mark 16 located at a predetermined height above the bottom of the boiler may be advantageously provided along the inner surface of boiler 12. Reference mark 16 may for example comprise a line in relief indicating the filling level for the first liquid component (for example water) in the boiler.

Boiler 12 also comprises a safety valve, not illustrated, fitted in a wall of the boiler.

18 indicates a container which can be inserted into the open mouth of boiler 12. The container is designed to contain a further component of the hot beverage which in the specific instance in which it is desired to prepare a cappuccino for example comprises ground or powdered coffee.

Container 18 comprises a bowl 20 which is extended beneath by a tube 22 which is for example connected to the bowl through a flared portion. The base of the bowl comprises at least one filter 24 for example comprising a disk with a plurality of small holes. According to one embodiment container 18 also comprises an edge 26 designed to rest on the upper edge of the open mouth of boiler 12.

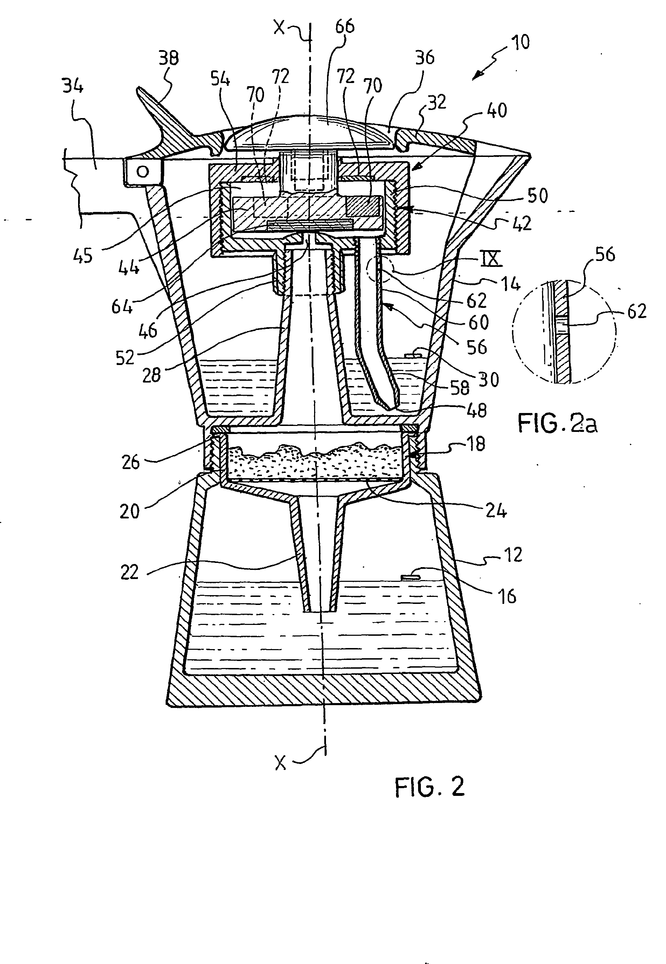

In the assembled position of equipment 10, container 18 is inserted into the boiler in such a way that tube 22 extends within the boiler. In addition to this collection container 14 is screwed to boiler 12 above container 18 as for example illustrated in Figure 2.

Within collection container 14, preferably centrally therewith, there arises a delivery pipe 28 which is open at the top and bottom. The delivery pipe extends along an axis X which under the normal conditions of use of the equipment lies in a substantially vertical direction.

Lower opening of delivery pipe 28 is in communication with boiler 12, in particular with container 18, for example through the intermediary of a further filter, not illustrated, which forms the base of the collection container. The upper opening of delivery pipe 28, that is the outlet of delivery pipe 28, empties into collection container 14. In accordance with a possible embodiment the outlet of the delivery pipe is provided with a threaded portion.

According to a possible embodiment, a reference mark 30 located at a predetermined height above the base of the collection container may advantageously be provided along the inner surface of collection container 14. Reference mark 30 may for example comprise a line in relief indicating the filling level for the second component (for example milk, if specified) in the collection container.

In the examples illustrated, tube 22, container 18 and delivery pipe 28 constitute means defining a delivery path for the third liquid component, for example water, from the boiler to the collection container. The means defining a delivery path may however be provided differently.

32 indicates a lid for the equipment, mounted on the collection container. The lid is advantageously hinged on one side of the collection container, for example on the side of a handle 34. In accordance with a possible embodiment lid 32 has an opening 36. Preferably the opening is made in the portion located above delivery pipe 28, even more preferably in a central portion of the lid.

In accordance with the possible embodiment lid 32 has a graspable element 38 located in an off-centre position on the lid. Graspable member 38 is for example located between opening 36 and handle 34, advantageously in a projecting portion 33 of the lid.

Equipment 10 advantageously comprises valve means 40 located along the delivery path for the first liquid component. Figures 1 and 1a illustrate an exploded perspective view in partial cross-section of two embodiments of valve means 40.

According to a possible embodiment the valve means are located at the outlet of delivery pipe 28, preferably along axis X.

According to a possible embodiment, valve means 40 comprise a valve body 42 in which there is housed a plug 44 which can move between a closed position and an open position along the delivery path according to the pressure within the boiler. Plug 44 can for example move in a direction coinciding with the direction of gravity, and in particular with the X axis. In this way the weight of the plug acts on the plug tending to move it into or hold it in a closed position and the force deriving from the pressure in the boiler tends to push it into an open position (upwards with reference to normal use of the equipment).

Valve body 42 defines a chamber 45 in which there is housed plug 44 and is provided with an inlet 46 which can be placed in communication with the outlet of the delivery path and an outlet 48 which can be placed in communication with collection container 14.

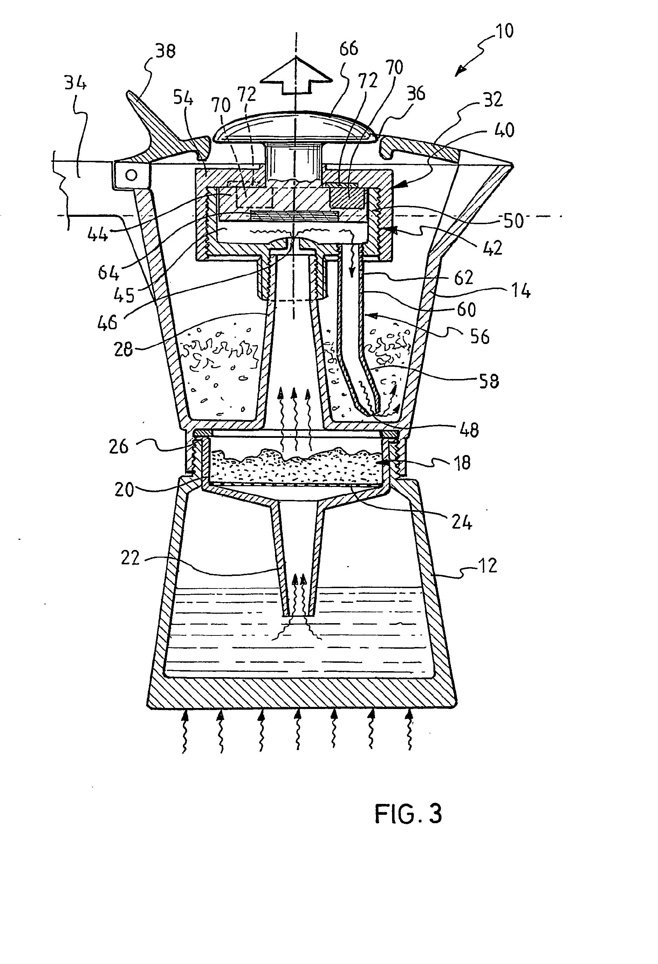

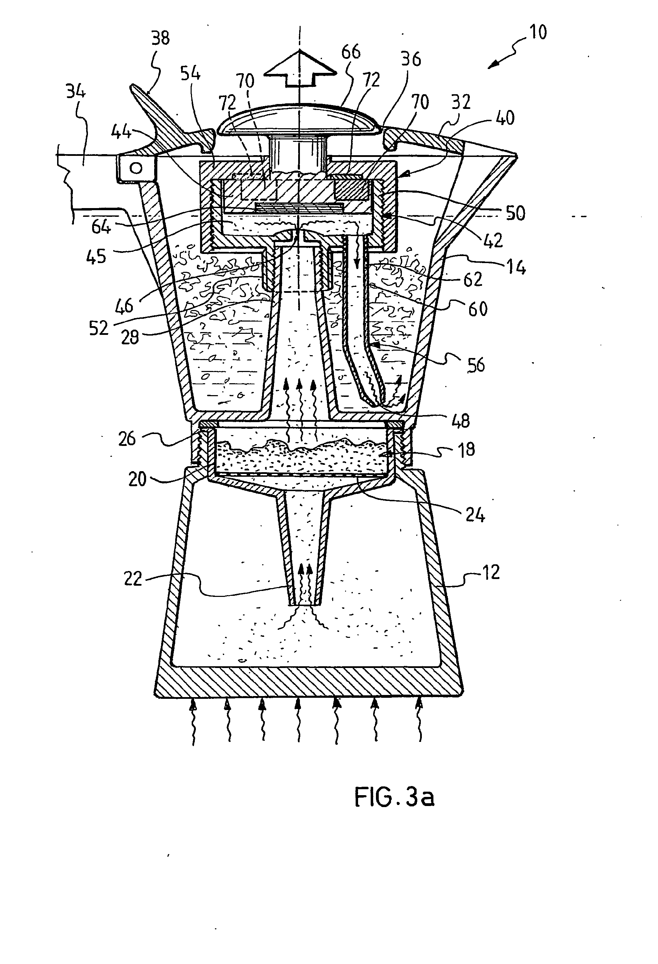

With reference to the example illustrated in Figure 1, the valve body comprises a seat 50 which can be fitted in delivery pipe 28. In particular seat 50 has a cylindrical wall which laterally bounds chamber 45 and an end in which inlet 46 is provided. From the bottom of seat 50 there extends beneath a threaded portion 52 which can be attached to the threaded portion of delivery pipe 28. In the situation in Figure 1 the thread for the valve means is external so that it can be screwed internally into the delivery pipe, whereas in Figures 2, 3 and 3a the valve means are screwed to the delivery pipe externally.

Valve body 42 also comprises a cap 54 mounted on the seat to close chamber 45. Advantageously lid 42 is screwed to seat 50, preferably to the cylindrical wall.

According to a possible embodiment, inlet 46 of valve body 44 is located centrally in the bottom of seat 50. In other words inlet 46 has the same access as delivery pipe 28.

According to a possible embodiment, outlet 48 from valve body 44 is located laterally at the inlet with respect to the X axis of delivery pipe 28.

Advantageously delivery pipe 28 has an extension within collection container 14 such as to keep inlet 46 of the valve body above the surface of the hot beverage present in the collection container (Figure 3a).

According to a possible embodiment, outlet 48 from valve body 44 lies at a level lower than inlet 46 along the X axis with reference to the normal condition of use of the equipment. Advantageously valve body 44 comprises at least one conduit 56 having a free end defining outlet 48 from the valve body. Preferably the free end has a smaller cross-section than the remaining part of the conduit, for example in the shape of a nozzle.

According to a possible embodiment, conduit 56 extends below the bottom of valve body 44, in communication with chamber 45 through an opening 57. Advantageously the full length of conduit 56 is located beneath inlet 46 of valve body 44.

In accordance with a possible embodiment, conduit 56 is straight. Figure 1 illustrates a possible embodiment in which the conduit extends in a single direction, preferably parallel to the X axis. Figure 1a illustrates a different embodiment in which advantageously conduit 56 has a terminal portion 58 which is inclined with respect to a portion 60 of the conduit attached to the valve body. Advantageously terminal portion 58 is inclined with respect to the direction of the X axis of delivery pipe 28. Even more advantageously the terminal portion 58 of conduit 56 is inclined in a direction tangential to a circumference centered on the X axis of the delivery pipe.

According to a possible embodiment, conduit 56 comprises at least one portion parallel to the X axis of the delivery pipe, for example attachment portion 60.

Advantageously conduit 56 is mounted on valve body 44 in a movable manner. It may for example be fitted through a threaded or a snap connection or by other means.

In accordance with a possible embodiment, valve body 44 comprises means to avoid the beverage being sucked back along the delivery path into the boiler. Advantageously these means are constructed as vent means. In accordance with a possible embodiment the vent means comprise a capillary opening 62 provided in the valve means. Preferably capillary opening 62 is located at a level which remains above the level of the hot beverage present in collection container 14. Even more preferably the capillary opening lies in the wall of conduit 56 (Figure 2a) close to the bottom of the valve body.

In accordance with a possible embodiment, plug 44 has a shape such as to be housed within chamber 45, preferably a cylindrical shape. Advantageously a seal 64 is located on the face of the plug closing inlet 46 of the valve body. In accordance with a possible embodiment seal 64 is fixed in a seat of the plug or directly on the face of the plug which closes inlet 46 of the valve body.

In accordance with a possible embodiment the plug comprises a portion 66 which extends outside the valve body through opening 68 and which, for example, may take the form of a plunger. Opening 68 is located opposite the delivery pipe, for example in the lid of the valve body. In particular portion 66 which extends outside the valve body comprises a portion having dimensions larger than the dimensions of opening 68. In accordance with a possible embodiment the weight of the plug is calibrated in such a way that the delivery path opens at a particular pressure in the boiler which is sufficient to raise the plug. Advantageously the plug is calibrated by specifying the materials and dimensions of portion 66.

Advantageously portion 66 which extends outside the valve body is mounted on the plug through opening 68 of the valve body. For example portion 66 which extends outside the valve body is screwed to the plug. In accordance with other embodiments portion 66 is inserted into the plug by a snap fitting or by other means of attachment.

In accordance with a possible embodiment, in the assembled configuration of equipment 10 and with lid 32 closed onto the collection container, opening 36 of lid 32 is capable of at least partly receiving portion 66 of the plug which extends outside valve body 44. In other words portion 66 of the plug is at least partly accessible from outside the equipment through opening 36 in lid 32. Again in other words the dimensions of opening 36 are such as to at least partly receive portion 66.

Advantageously the valve means comprise means to immobilise the plug in the position in which the delivery path is open. These means are for example motivated by movement of the plug between the closed position and the open position. In other words the plug is immobilised in the open position through movement of the plug itself from the closed (lowered) position to the open (raised) position in the delivery path.

A first means whereby the means for immobilising the plug may be operated may occur during heating of the equipment, in particular when a particular pressure is reached within the boiler sufficient to raise the plug. In fact the first liquid component rises along the delivery path and pushes the plug from its initial closed position to the open position activating the means for immobilising the plug.

A second means whereby the means for immobilising the plug may be activated may be available before heating the equipment, during the stage of preparing the equipment according to the beverage which it is desired to obtain, or during the stage of setting the operating means of the equipment. This second means provides that it is the user who raises the plug pulling portion 66 upwards until the means for immobilising the plug are activated.

In accordance with the possible embodiment the means for immobilising the plug comprise at least one pair of members 70, 72 designed to interact magnetically with each other, in particular to attract each other through magnetic force, for example a pair of magnets of opposing polarities or a magnet and a member of ferromagnetic material.

Advantageously a first member 70 of the said pair of members is mounted on plug 44 and a second member 72 of the said pair of members is mounted on a fixed portion, for example on the valve body housing the plug, preferably on the lid of the valve body. In accordance with a different embodiment a first member may comprise the plug itself or a second member may comprise the valve body.

Advantageously the means for immobilising the plug in the open position are located within the valve body.

In the example illustrated in Figure 1, at least three pairs of members which can attract each other by magnetic force are provided. In this case each pair is located approximately 120° from the others. According to a different embodiment at least two pairs of members capable of attracting each other by magnetic force may be provided.

The embodiment illustrated in the figures provides advantageously that the means for immobilising the plug are shaped in such a way that they can be activated and deactivated by an action applied along the direction of movement of the plug, as will be described below.

In particular the immobilising means are shaped in such a way as to be activated by the movement of the plug itself from the closed position to the open position. As will be described below, this movement of the plug and therefore this activation may be brought about by the pressure within the boiler, that is at the time of delivery, or by the user by setting the operating mode of the equipment.

In addition to this the means for immobilising the plug are shaped in such a way that they can be deactivated by exerting a force directly on the plug designed to return it to the closed position. This force is advantageously exerted directly on the plunger portion of the plug which extends outside the valve body.

A description of the operation of an item of equipment according to this invention is provided below with reference to Figures 2, 3 and 3a. With reference to the example illustrated, the equipment is designed to prepare a hot beverage commonly known as cappuccino. Other possible uses will be described below.

A quantity of water is placed in boiler 12, for example up to reference mark 16. Container 18 for ground coffee is placed in the open mouth of the boiler and a quantity of ground coffee is placed in container 18. Collection container 14 is screwed onto boiler 12 and a quantity of milk is placed in collection container 14, for example up to level 30. The configuration described above is for example illustrated in Figure 2 in which the configuration of the valve means, that is the plug in the closed (or lowered position), may be seen. This initial configuration is particularly advantageous for preparing cappuccino in that it makes it possible to raise the pressure and temperature conditions in the boiler at the time when delivering the coffee infusion, thus achieving a high delivery rate for the infusion resulting from that pressure value. The weight of plug 44 and outlet diameter 48 contribute to operation of the equipment.

The equipment is then placed on a source of heat in such a way as to heat the boiler. The water and air within the boiler heat up causing an increase in pressure within the boiler. As pressure increases the first liquid component (which in the case of the preparation of a cappuccino is water), begins to rise up the delivery path, that is along tube 22, cup 20 and delivery pipe 28. In passing through the ground coffee the water expands and irrigates all the coffee powder producing a coffee infusion.

Plug 44 however remains in the closed position, that is in the lowered position, until a particular pressure is reached within the boiler, which is greater than atmospheric pressure and capable of raising the plug. When this pressure is reached the plug rises and reaches the open position. The coffee infusion leaves delivery pipe 28 through chamber 45 and pours into collection container 14 through outlet 48. Because of the presence of the valve means the rate at which the coffee infusion leaves is particularly high.

The thrust exerted on plug 44 and the consequent movement of the plug from the closed position to the open position activates the means for immobilising the plug. In the situation illustrated in Figure 3 the magnets located on the plug are attracted by those provided on the valve body holding the plug in the open or raised position. Movement of the plug can be seen from the outside as a result of the movement of plunger portion 66 which, if present, passes at least partly through opening 36 in the lid.

The coffee infusion leaves the nozzle of conduit 56 and pours into the milk present in the collection container, mixing with it (Figure 3). The milk is heated through both the effect of mixing with the coffee infusion and through thermal conductivity by the material of the equipment.

By immobilising the plug, the delivery pipe is held open until all the coffee infusion and vapour produced by the residual water present in the boiler has been delivered (Figure 3a), that is even when the pressure within the boiler falls beneath the value sufficient to raise the plug.

In addition to heating the milk, delivery of the coffee infusion and in particular the subsequent delivery of steam generate turbulence in the milk as a result of which the steam comes into intimate contact with the milk and forms a foam which makes it possible to prepare the so-called cappuccino. With this object outlet 48 is located in such a way as to lie beneath the level of liquid in collection container 14.

When delivery of the coffee infusion and steam is complete, it is possible to pour out the cappuccino and restore the equipment for further use. If the further use is that of obtaining another cappuccino, it is preferable to restore the valve means to the initial position (Figure 2), that is it is necessary to return the plug to the closed position, that is the lowered position.

In the case of the equipment in Figure 3a it is sufficient to press on plunger portion 66 so as to overcome the magnetic force holding the plug in the raised position. The position of the plug can be clearly seen both with lid 32 raised and with lid 32 lowered.

In the situation in which the cappuccino is left in the equipment for sufficient time to cause the boiler to cool, the pressure within the boiler may fall sufficiently to suck the beverage contained in the collection container within it back through conduit 56. The presence of means to prevent sucking-back prevents the beverage from returning along the delivery path to the boiler. In the specific case of the vent means and in particular opening 62, sucking back is prevented in that the negative pressure within the boiler draws in air through the vent means and in particular opening 62.

The presence of vent means therefore prevents cappuccino from being sucked back from the collection container along conduit 56, valve means 40 and delivery pipe 28 to reach the boiler if negative pressure occurs within the boiler as a result of cooling of the equipment.

In the situation in which ground coffee is not placed in container 18, this equipment can be used to heat and/or foam the milk present in the collection container through hot water and steam from the boiler.

In the situation in which the valve means are initially set immobilising the plug in the open position, the final result is a hot beverage for example of the latte or caffè latte type, that is a non-foamy beverage.

In accordance with a possible embodiment this invention relates to a method for preparing cappuccino using a coffee-maker or cafetière comprising a boiler, a container for ground coffee and a collection container. This method comprises the stages of:

Providing the coffee-maker with a quantity of water in the boiler, a quantity of ground coffee in the container for ground coffee and a quantity of milk in the collection container of the coffee-maker,

Heating the boiler to an excess pressure with respect to atmospheric pressure in which a plug located along a delivery path for the coffee infusion from the boiler to the collection container opens the said delivery path,

Immobilising the said plug in the position in which the delivery pipe is open until all the coffee infusion and vapour present in the boiler have been delivered,

In which the said plug is immobilised in the said position in which the delivery pipe is open through magnetic interaction or through a magnetic flux, preferably through magnetic attraction.

According to a possible embodiment, this invention relates to a method for heating and foaming milk using a coffee-maker comprising a boiler and a collection container. This method comprises the stages of:

Providing the coffee-maker with a quantity of water in the boiler and a quantity of milk in the collection container of the coffee-maker,

Heating the boiler to an excess pressure with respect to atmospheric pressure in which a plug located along the delivery path for the water from the boiler to the collection container opens the said delivery path,

Immobilising the said plug in the position in which the delivery pipe is open until all the water and steam present in the boiler have been delivered,

In which the plug is immobilised in the position in which the delivery pipe is open through magnetic interaction or through a magnetic flux, preferably through magnetic attraction.

The equipment according to this invention is also suitable for the preparation of other types of beverages. In order to prepare a coffee infusion or other similar products, the equipment may be used and behaves like a coffee-maker of the known type. In this case a quantity of water is placed in the boiler. This quantity of water may be different from that specified for the cappuccino. In addition to this a quantity of powdered coffee or other similar product is placed in container 18. Container 18 is positioned in the boiler and the collection container is screwed to the boiler. The equipment is then placed on a source of heat so that the temperature and pressure conditions of the water and air within the boiler increase.

If the valve means have been initially set so that the plug is located in the closed position, that is in the lowered position with reference to the normal condition of use of the equipment, the pressure which is generated in the boiler must be capable of raising the plug before delivering the coffee infusion. The weight of the plug is calibrated in such a way that the coffee infusion leaves rapidly at the delivery pressure, so that it is particularly creamy and similar to that prepared using industrial machines.

Alternatively it is possible to set the valve means in such a way that the plug is immediately immobilised in the open position. Not having to overcome the weight of the plug, the coffee infusion flows into the collection container in the manner of operation of a conventional coffee-maker.

The initial setting chosen for the valve means makes it possible to control the pressure, temperature and rate conditions at the time of delivery in all possible modes of use of the equipment.

In fact, with reference to the manner of use as a coffee-maker, this invention relates to a method for selectively obtaining a coffee infusion with or without foam by means of a coffee-maker comprising a boiler, a container for powdered coffee, and a container for collection of the coffee infusion.

This method comprises the stages of:

Providing the coffee-maker with a quantity of water in the boiler and a quantity of ground coffee in the container for ground coffee,

Setting the position of a plug located along a delivery path for the water from the boiler to the collection container between a position in which the delivery path is closed and a position in which it is open, in which the plug can be immobilised in the position in which the delivery pipe is open through magnetic interaction or through a magnetic flux, preferably through magnetic attraction,

Heating the boiler to an excess pressure with respect to atmospheric pressure in order to deliver a coffee infusion with or without foam depending upon the position in which the plug is set.

This method can be applied to any other type of hot beverage.

Further uses are also possible with regard to the components used, for example powdered milk, barley coffee or others. In fact, in addition to operating as a conventional cafetière or as a cafetière capable of preparing foamy coffee, this invention relates in general terms to equipment for the preparation of a hot beverage comprising at least one first liquid component and one second preferably liquid component which is miscible with the first component, in which the boiler is designed to contain the first liquid component and the collection container is designed to contain the second component.

It is clear that variants and/or additions may be made to what has been described and illustrated above.

With reference to the embodiment of the means for immobilising the plug in the open position, the pair of members capable of attracting each other by magnetic force may be constructed in a manner different to that described and/or illustrated. In particular the magnetic force which holds the plug in the open position may be activated or deactivated in any direction with respect to the movement of the plug.

In addition to this it may be provided that a member of the pair of members be mounted on the plug while the other member of the said pair of members be associated with a portion of the collection container, for example the lid.

In this case the lid may be conventional, that is without a through hole. Possibly the lid or a part thereof may be constructed of ferromagnetic material or may comprise a ferromagnetic member or a member of a pair of magnets having opposite polarity.

The member of the said pair of members associated with the plug may advantageously be associated with a portion which extends outside the valve body housing the plug.

Provision may also be made for other embodiments which use magnets or members capable of attracting each other magnetically and holding the plug in the open position. In particular the embodiment of immobilising means in which members capable of attracting each other by magnetic force are provided may be independent of the means of activating/deactivating the same along the direction defined by the movement of the plug. For example the two members of the pair of members capable of attracting each other by magnetic force may be deactivated in any direction.

The entire plug may be constructed in the form of a magnet, with the provision that the other member is a magnet of opposite polarity or a ferromagnetic member. Alternatively the plug may be manufactured from ferromagnetic material, providing that the other member of the pair is a magnet.

In accordance with a possible embodiment, the means for immobilising the plug may operate generically by means of a magnetic flux, that is by a force of attraction or by means of a force of repulsion, depending upon the shape and arrangement of the members forming the pair.

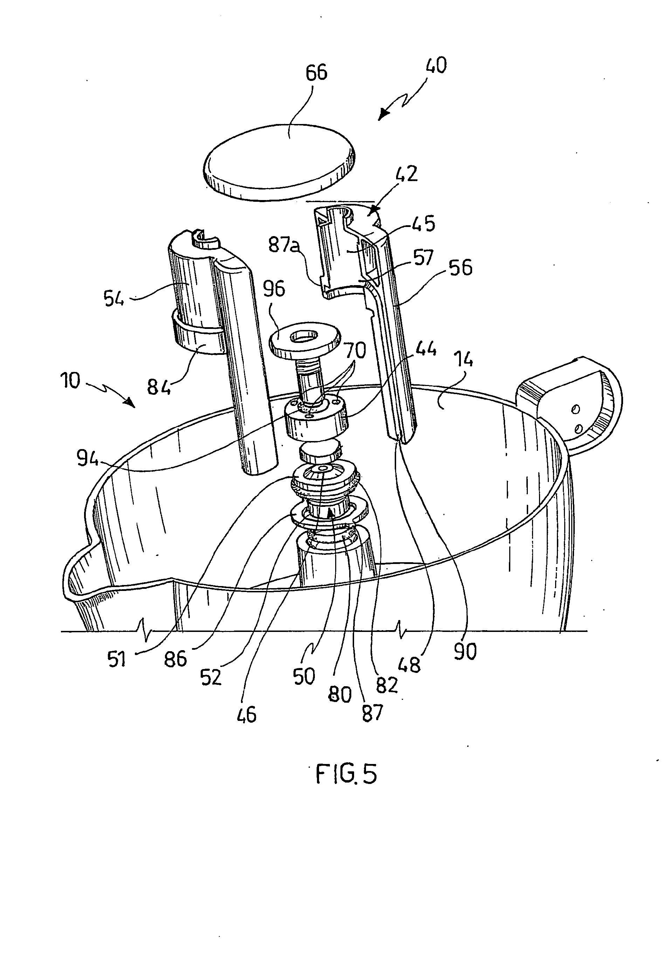

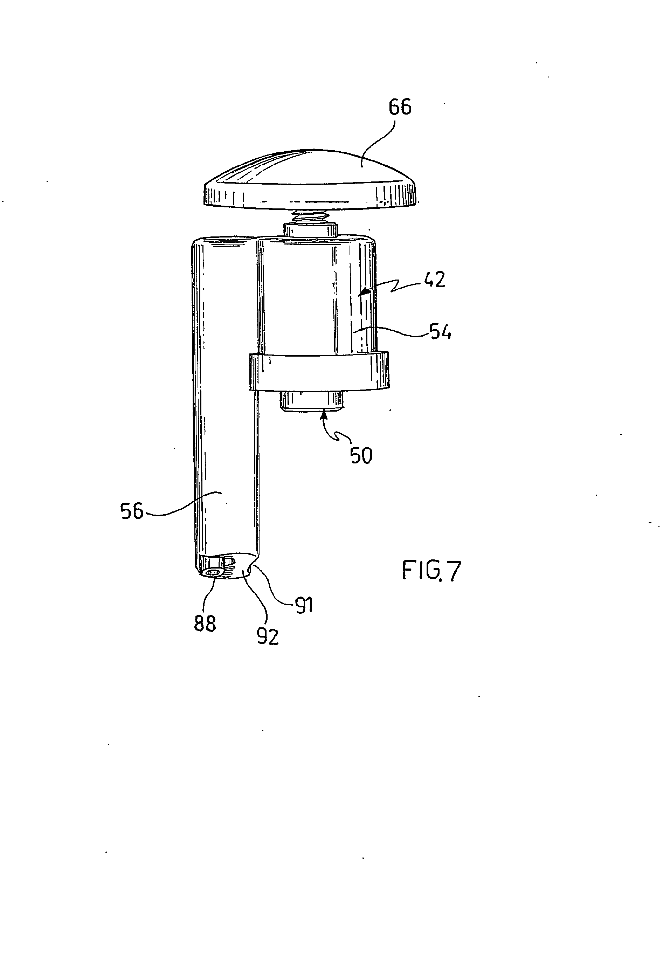

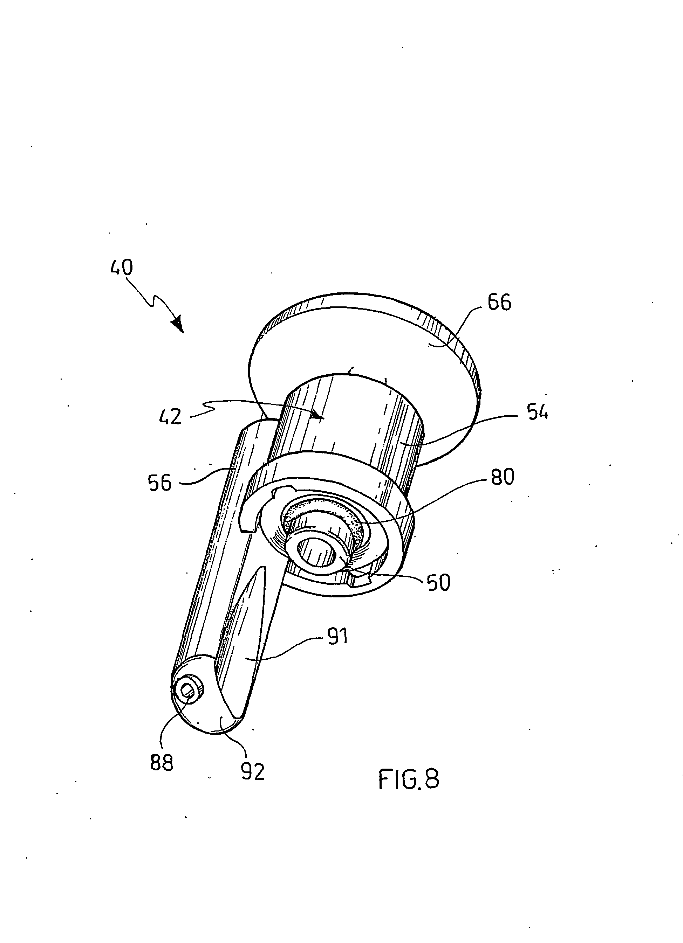

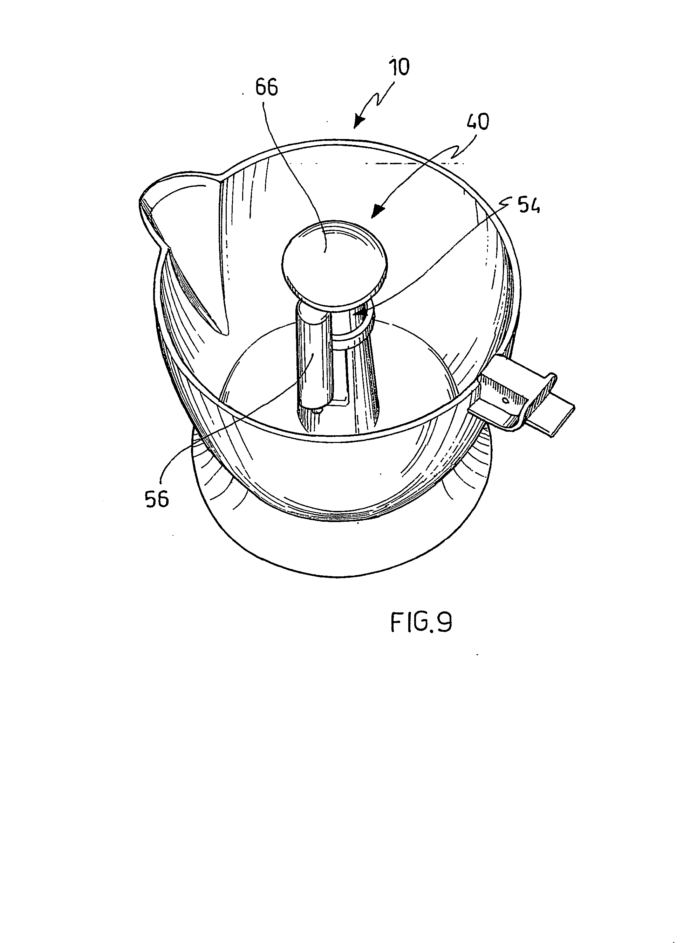

Figures 5-9 illustrate a possible embodiment of the equipment according to this invention and in particular valve means 40.

In accordance with a possible embodiment valve body 42 forms a chamber 45 in which there is housed plug 44 and in which there is provided an inlet 46 capable of being placed in communication with the outlet of the delivery path and an outlet 48 capable of being placed in communication with collection container 14. The plug may for example be constructed as in Figure 1 or in accordance with the other embodiments previously described. In accordance with a possible embodiment the plug is constructed of non-magnetic material (for example brass, plastics, etc.) and as in Figure 1 comprises one or more members 70 of a pair of members capable of attracting each other by magnetic force.

Seat 50 designed to be fitted on delivery pipe 28 has a bottom 51 in which there is provided inlet 46. Unlike the seat in Figure 1 the cylindrical wall of the valve body is defined by cap 54. A threaded portion 52 extends downwards from body 51 and can engage the threaded portion of delivery pipe 28, preferably internally. In accordance with a possible embodiment, seal 80 is mounted on portion 52.

Cap 54 forms a side or top wall for chamber 45. Advantageously cap 42 is inserted onto seat 50, as will be described below. In accordance with a possible embodiment, a seal 82 is housed between seat 50 and cap 54.

In accordance with a possible embodiment cap 54 extends below the bottom of seat 50 with an annular portion 84 which can externally enclose an end portion of delivery pipe 28. In accordance with a possible embodiment a guide and immobilising ring 86 is inserted below seat 50, between the seat and the delivery pipe. Guide and immobilising ring 86 comprises a tooth 87 which can be inserted into a groove 87a in the valve body, more specifically in annular portion 84, through a passage 87b.

In general terms, valve body 42 in which plug 44 is housed is movably mounted on delivery pipe 28. In particular seat 50 of valve body 42 is movably mounted on delivery pipe 28 and cap 54 is movably mounted on seat 50. In the situation in Figure 1 the cap is screwed onto the seat, in the situation in Figure 5 the cap is immobilised on delivery pipe 28 by seat 50. In other words cap 54 comprises a bayonet connection with the delivery pipe. This bayonet connection is provided by means of the coupling between groove 87a and tooth 87.

Advantageously the bayonet connection is provided between delivery pipe 28 and annular portion 84 of cap 54 which is capable of externally enclosing an end portion of the delivery pipe.

According to a different embodiment, which is not illustrated, the bayonet connection is provided directly between the delivery pipe and the cap, or the valve body, for example by providing a tooth directly on the delivery pipe.

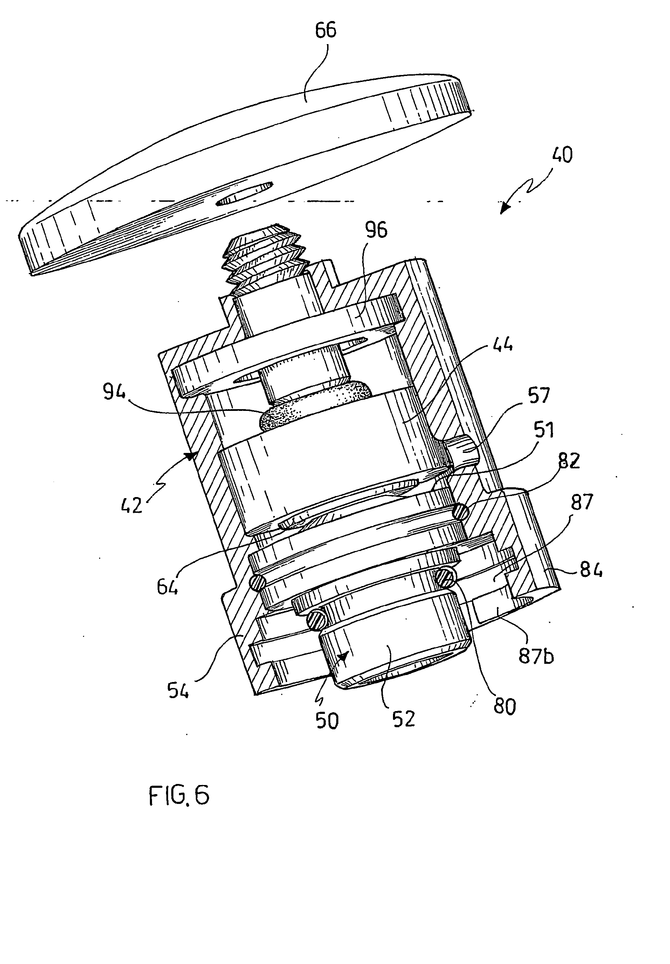

Advantageously conduit 56 is made of one piece in the valve body, more specifically in cap 54. In more detail, cap 54 is made in two parts which divide it in half along a longitudinal plane which also divides conduit 56. The two halves are capable of being attached to each other and of internally receiving the members forming valve means 40. In accordance with a possible embodiment cap 54 is made of plastics material and the two halves are welded together, for example by ultrasound. In accordance with a possible embodiment conduit 56 is welded to cap 54 provided in two halves or as a single cylindrical body. Figure 6 in fact shows the valve body to which conduit 56 has not yet been welded.

In accordance with a possible embodiment conduit 56 extends laterally from the valve body, in communication with chamber 45 through an opening 57 provided laterally in that chamber, for example in the side wall of cap 54. Preferably opening 57 is provided substantially at the same level as inlet 46. Advantageously the walls forming conduit 56 define a radial protuberance of the valve body which extends preferably over the entire height of the valve body. In the case in which conduit 56 extends laterally from the valve body, the conduit has a first curved portion and a second straight portion, for example parallel to the X axis.

In accordance with a possible embodiment, outlet 48 is constructed in the form of a nozzle 88 which can be inserted into a widened seat 90 of conduit 56 and which preferably projects below the conduit. Advantageously a lower wall 92 of conduit 56 is inclined with respect to the X direction in such a way that nozzle 88 is also inclined with respect to the X direction.

Nozzle 88 forms a passage having a cross-section which is less than that formed by conduit 56.

In accordance with a possible embodiment, valve body 44 comprises means to prevent the beverage from being sucked back along the delivery path to the boiler. These means may be provided by vent means, which are not shown, and which are substantially constructed as described in relation to the embodiment in Figure 1.
Alternatively the means to prevent sucking back of the beverage may comprise nozzle 88 defining a passage cross-section which is less than that formed by conduit 56 and possibly conduit 56 may be constructed laterally to the valve body as in Figure 5. This arrangement of the means for preventing sucking back, and in particular the passage cross-section of nozzle 88, cause a loss of head which prevents the beverage from being sucked back along conduit 56 before the negative pressure within the boiler returns the plug to the closed position of the delivery path and opening 57.

In other words, the means for immobilising the plug are arranged in such a way that they can be deactivated by the negative pressure which may be generated within the boiler.

In accordance with a possible embodiment, the walls forming conduit 56 have a recess 91 to fit on the delivery pipe.

In accordance with a possible embodiment, plug 44 has a cylindrical shape capable of being received within chamber 45. Advantageously a seal 64 is located on the face of the plug which closes inlet 46 of the valve body. In accordance with a possible embodiment a further seal 94 is fitted on a rod of plug 44 forming portion 66 extending outside the valve body.

In accordance with a possible embodiment, the pair of members which are capable of attracting each other by magnetic force comprise a first member comprising the plug itself or magnets (or ferromagnetic members located on the plug) and a ring 96 housed within the valve body constructed in accordance with the member selected for the plug.

Advantageously ring 96 and plug 44 are located concentrically within the valve body.

The functioning of the valve means in Figures 5-9 is similar to that in Figure 1. In the situation in which nozzle 88 is provided, sucking back of the beverage is prevented by the fact that the negative pressure within the boiler pulls the plug back into the closed position before the beverage can rise along conduit 56 as a result of the loss of head caused by the nozzle.

The mounting of the loading means described above provides that seat 50 is screwed onto delivery pipe 28 with an intermediate seal 80 and guide and immobilising ring 86. Cap 54 in which the plug is housed is inserted on seat 50 in such a way that tooth 87 of guide and immobilising ring 86 is inserted into passage 87b and reaches groove 87a. By rotating cap 54 passage 87b is offset with respect to tooth 87 which is inserted into groove 87a immobilising cap 54 with respect to seat 50 and delivery pipe 28.

In order to dismantle the valve means it is sufficient to rotate the lid until passage 87b is in line with tooth 87 and lift the lid from seat 50. In this way the components forming the equipment can be thoroughly cleaned.

Notwithstanding the embodiments illustrated, which constitute possible embodiments, the means for immobilising the plug may advantageously be arranged in such a way that they can be activated and deactivated by an action exerted in the direction of movement of the plug. In other words the plug is immobilised in or released from the position in which the delivery pipe is open through a force which is exerted along the direction of motion of the plug.

In addition to this, regardless of the embodiment, the means for immobilising the plug may be arranged in such a way that they can be deactivated by applying a force directly to the plug sufficient to return it to the closed position.

In accordance with a general aspect regardless of the direction of activation or deactivation, the means for immobilising the plug in the open position are advantageously located substantially within the valve body in order to prevent contamination with the components of the beverage, in particular milk. In particular a first portion of the said immobilising means is associated with the plug while a second portion of the said immobilising means is associated with a portion which is fixed, for example to the valve body or preferably to a cap of the said valve body or to the equipment itself.

In general terms the means for immobilising the plug in the open position may be activated and/or deactivated through the lid of the coffee-maker, that is even when the lid is closed.

Further variants are possible with reference to any embodiment described.

For example the valve means may be attached to the delivery pipe in a different way. Other immobilising means of a snap and/or interlocking or other form may be provided.

In addition the valve means may comprise the plug alone mounted floating on the delivery pipe as for example provided in patent EP 932355 incorporated herein for reference in connection with the mounting of the plug on the delivery pipe. In this case the pair of members capable of attracting/repelling each other through magnetic force may be provided between the plug and the lid of the equipment or the delivery pipe.

In accordance with a possible embodiment opening 36 in lid 32 may be provided with a closure which is for example flexible and/or transparent through which it is possible to act on portion 66 of the plug, but which prevents any escape of liquid. Preferably the dimensions of opening 36 make it possible to open the lid of the equipment without dismantling the plug or portion 66 thereof.

The lid may possibly be of the conventional type, without an opening, with space being provided within the container for movement of the valve means.

All the embodiments in which a conduit 56 is provided to provide the outlet 48 from the valve means, this conduit may be made of one piece with the valve body or may be mounted on the same in various configurations.

Advantageously the means for preventing sucking back may have embodiments other than those illustrated. For example vent means provided with a capillary opening in the valve body or the lid of the valve body instead of in conduit 56 may be provided. In addition to this the vent means may be used in any type of valve means, for example with the plug mounted floatingly in the delivery pipe or with means for immobilising the plug which are different from those described previously.

The equipment used may be suitable for location on an external source of heat or may be provided with electrical resistances which can be activated by means of a switch or base plate.

In accordance with one embodiment this invention relates to valve means for equipment for the preparation of a hot beverage, for example comprising at least one first liquid component and one second preferably liquid component which is miscible with the said first component.

In particular the valve means are capable of being located along the delivery path of the equipment and comprise a plug which can move between a position in which the delivery path is closed and one in which it is open depending upon the pressure within the boiler, and means for immobilising the plug in the open position. Advantageously the means for immobilising the plug comprise at least one pair of members which are capable of attracting/repelling each other through magnetic force. In accordance with a further embodiment the means for immobilising the plug are arranged in such a way that they can be activated and deactivated by a force exerted along the direction of movement of the plug.

It will be appreciated from the above that provision of equipment or valve means according to this invention makes it possible to achieve greater versatility in use and particularly satisfying beverages.

The presence of the valve means makes it possible, if activated, to raise the temperature and pressure conditions at the time of delivery and thus the rate of delivery. In addition, by immobilising the plug in the open position while in operation it is possible to make use of delivery of all the steam in the boiler to create turbulence sufficient to cause the beverage to foam, in particular when based on milk.

The ease of manufacture and operation makes it possible to provide a very versatile coffee-maker in which the means for immobilising the plug in the open position can be activated automatically by movement of the plug during operation or directly by the user in order to set the operating mode of the coffee-maker at the outset.

All the components of the valve means may be dismantled and cleaned, having regard to use with liquids such as milk which, as is well known, creates problems with deposits and encrustations.

The advantageous provision of operation in a direction of movement of the plug makes it possible to simplify the structure appreciably and render operation intuitive. The fact that the position of the plug is visible, and makes it possible to set the initial conditions of the valve means, and therefore the type of operation desired, is particularly advantageous.

Of the embodiments described the provision of magnetic members (or members capable of exerting a magnetic force) is particularly advantageous in that this is reliable, rapidly activatable and deactivatable and is not compromised by the presence of any residues.

Where emptying of the collection container is delayed, it is possible to prevent the beverage from being undesirably sucked back into the boiler. In fact cooling of the boiler results in a fall in pressure within it which can cause the beverage to be sucked back along the delivery path. This sucking back is particularly undesirable in the case of beverages based on milk which would produce residues and encrustations which are difficult to remove along the delivery path and in the boiler.

Naturally, the principle of the invention remaining the same, the forms of embodiment and details of construction may be varied widely with respect to those described and illustrated, which have been given purely by way of example, without thereby departing from the scope of the invention.

## Claims

1. Equipment for the preparation of a hot beverage, comprising a boiler (12) designed to contain a liquid component of the said beverage, a collection container (14) and means (20, 21, 28) for defining a delivery path for the said liquid component from the boiler to the collection container,
the said equipment also comprising valve means (40) located along the delivery path for the said liquid component comprising a plug (44) which can move between a position in which the delivery path is closed and one in which it is open and means (70, 72; 70, 96) to immobilise the plug in the open position,
in which the said means to immobilise the plug (44) comprise at least one pair of members (70, 72; 70, 96) which can interact magnetically with each other.

2. Equipment for the preparation of a hot beverage according to claim 1, in which the said members of the said pair can attract each other through magnetic force.

3. Equipment for the preparation of a hot beverage according to claim 1 or 2, in which a member (70) of the said pair of members is associated with the plug (44), or is the plug itself, and the other member of the said pair of members is associated with a fixed portion of the said equipment.

4. Equipment for the preparation of a hot beverage according to claim 3, in which the said other member (72; 96) of the said pair of members is associated with a valve body (42) housing the said plug.

5. Equipment for the preparation of a hot beverage according to claim 4, in which the other member (72, 96) of the said pair of members is mounted on a cap (54) of the said valve body.

6. Equipment for the preparation of a hot beverage according to claim 4 or 5, in which the said at least one pair of members (70, 72; 70, 96) as located within the valve body (42).

7. Equipment for the preparation of a hot beverage according to claim 3, in which one member (70) of the said pair of members is associated with the plug (44) and the other member (72, 96) of the said pair of members is associated with a portion of the collection container (14).

8. Equipment for the preparation of a hot beverage according to claim 7, in which the other member (72, 96) of the said pair of members is associated with a lid (32) of the said collection container (14).

9. Equipment for the preparation of a hot beverage according to claims 7 or 8, in which the member (70) of the said pair of members associated with the plug (44) is associated with a portion (66) which extends outside a valve body (42) housing the said plug (44).

10. Equipment for the preparation of a hot beverage according to one of the preceding claims, in which the said immobilising means comprise at least two pairs of members (70, 72) capable of interacting with each other.

11. Equipment for the preparation of a hot beverage according to one of the preceding claims, in which the said immobilising means comprise at least three pairs of members (70, 72) capable of interacting magnetically with each other located approximately 120° from each other.

12. Equipment for the preparation of a hot beverage according to one of the preceding claims, in which the said immobilising means comprise at least one pair of members (70, 72; 70, 96) capable of interacting with each other exerting magnetic attraction or repulsion along a vertical direction in the position in which the equipment is used.

13. Equipment (10) for the preparation of a hot beverage according to one of the preceding claims, in which the said means for immobilising the plug are arranged so that at least one of the said members forming the said pair is in the form of a ring.

14. Equipment (10) for the preparation of a hot beverage according to claim 13, in which the said ring is a member common to at least two pairs of members.

15. Equipment (10) for the preparation of a hot beverage according to one of the preceding claims, in which the said means for immobilising the plug are arranged in such a way that they can be activated and deactivated by a force exerted along the direction of movement of the plug.

16. Equipment (10) for the preparation of a hot beverage according to claim 15, in which the said means can be activated by the movement of the plug between the closed position and the open position.

17. Equipment for the preparation of a hot beverage according to claim 15 or 16, in which the said plug can move in a direction coinciding with the direction of gravity.

18. Equipment for the preparation of a hot beverage according to one of the preceding claims, in which the said delivery path is at least partly defined by a delivery pipe (28) emptying into the said collection container (14) and the said valve means (40) are located at the outlet from the said delivery pipe (28).

19. Equipment for the preparation of a hot beverage according to claim 18, in which the said delivery pipe (28) extends at least partly within the collection container (14) along an axis (X) and in which the said valve means (40) are located at the outlet of the said delivery pipe (28) in an extension of the said access (X).

20. Equipment for the preparation of a hot beverage according to claim 19, in which he said plug (44) can move along the said axis (X).

21. Equipment for the preparation of a hot beverage according to one of claims 18 to 20, in which the said valve means (40) comprise a valve body (42) in which the plug (40) is housed provided with an inlet (46) capable of being placed in communication with the outlet of the said delivery path and an outlet (48) capable of being placed in communication with the said collection container (14).

22. Equipment for the preparation of a hot beverage according to claim 21, in which the said immobilising means lie within the said valve body (42).

23. Equipment for the preparation of a hot beverage according to claim 21 or 22, in which the said inlet (46) of the valve body (42) is axial with the said delivery pipe (28).

24. Equipment for the preparation of a hot beverage according to claim 23, in which the said outlet (48) of the valve body (42) is located laterally at the inlet (46) with respect to the said axis (X) of the delivery pipe (28).

25. Equipment for the preparation of a hot beverage according to one of claims 21 to 24, in which the said delivery pipe (28) has an extension within the collection container (14) such as to maintain the inlet (46) of the valve body (42) above the free surface of the hot beverage present in the collection container (14).

26. Equipment for the preparation of a hot beverage according to claim 25, in which the outlet (48) from the said valve body (42) lies at a level lower than the inlet (46) of the said valve body (42).

27. Equipment for the preparation of a hot beverage according to claim 26, in which the said valve body (42) comprises at least one conduit (56) having a free end defining the said outlet (48) of the valve body (42).

28. Equipment for the preparation of a hot beverage according to claim 27, in which the said conduit (56) extends downwards from an end of the said valve body (42).

29. Equipment for the preparation of a hot beverage according to claim 28, in which the full extent of the said conduit (56) lies below the said inlet (46) of the valve body (42).

30. Equipment for the preparation of a hot beverage according to claim 27, in which the said conduit (56) extends laterally to the valve body (42).

31. Equipment for the preparation of a hot beverage according to one of claims 27 to 30, in which the said conduit (56) is movably mounted on the valve body (42).

32. Equipment for the preparation of a hot beverage according to one of claims 27 to 30, in which the said conduit (56) is of one piece with the valve body (42).

33. Equipment for the preparation of a hot beverage according to one of claims 27 to 32, in which the said conduit (56) is straight.

34. Equipment for the preparation of a hot beverage according to one of claims 27 to 33, in which the said conduit (56) has a terminal portion (58) which is inclined with respect to an attachment portion (60) of the said conduit (56) to the valve body (42).

35. Equipment for the preparation of a hot beverage according to one of claims 27 to 34, in which the said at least one conduit (56) comprises at least one portion (58) parallel to the said axis (X) of the delivery pipe (28).

36. Equipment for the preparation of a hot beverage according to claim 35, in which the said conduit (56) has a terminal portion (58) which is inclined with respect to the direction of the said axis (X).

37. Equipment for the preparation of a hot beverage according to claim 36, in which the said terminal portion (58) of the said conduit (56) is inclined in a tangential direction to a circumference centered on the said axis (X).

38. Equipment for the preparation of a hot beverage according to one of claims 27 to 37, in which the said conduit comprises a nozzle (88) located at the outlet (48) and defining a passage cross-section which is smaller than the passage cross-section of the conduit (56).

39. Equipment for the preparation of a hot beverage according to one of claims 21 to 38, in which the said valve body (42) comprises means for preventing the beverage from being sucked back within the boiler.

40. Equipment for the preparation of a hot beverage according to claim 39, in which the said means for preventing the beverage from being sucked back within the boiler comprise vent means.

41. Equipment for the preparation of a hot beverage according to claim 40, in which the said vent means comprise a capillary opening (62).

42. Equipment for the preparation of a hot beverage according to claim 41, when dependent upon one of claims 27 to 38, in which the said capillary opening (62) is made in the said conduit (56) at a level capable of remaining above the level of the hot beverage present in the collection container (14).

43. Equipment for the preparation of a hot beverage according to one of claims 21 to 42, in which the said valve body (42) in which the plug (44) is housed is movably mounted on the delivery pipe (28).

44. Equipment for the preparation of a hot beverage according to claim 43, in which a seat (50) of the valve body (42) is movably mounted on the delivery pipe (28) and a cap (54) is movably mounted on the said seat (50).

45. Equipment for the preparation of a hot beverage according to claim 43 or 44, in which the said cap (54) comprises a bayonet connection with the said delivery pipe.

46. Equipment for the preparation of a hot beverage according to claim 45, in which the said bayonet connection is located between the said delivery pipe (28) and an annular portion (84) of the said cap (54) capable of externally enclosing an end portion of the delivery pipe (28).

47. Equipment for the preparation of a hot beverage according to claim 45 or 46, in which the said bayonet connection comprises a groove (87a) in the said cap (54) capable of receiving a tooth (87) through a passage (87b), the said tooth being of one piece with the delivery pipe (28).

48. Equipment for the preparation of a hot beverage according to claim 47, in which the said bayonet connection comprises a guide and immobilising ring (86) inserted between the seat (50) and in the delivery pipe (28), the said guide and immobilising ring (86) comprising the said tooth (87).

49. Equipment for the preparation of a hot beverage according to one of the preceding claims, in which the said means for immobilising the plug are arranged in such a way that they can be deactivated by exerting a force directly on the said plug capable of returning it to the closed position.

50. Equipment for the preparation of a hot beverage according to one of the preceding claims, in which the said valve means (14) comprising valve body (42) in which the plug (44) provided with an inlet (46) capable of being placed in communication with the outlet from the said delivery path and an outlet (48) capable of being placed in communication with the said collection container (14) are housed and in which the said plug (44) comprises a portion (66) which extends outside the valve body (42).

51. Equipment for the preparation of a hot beverage according to claim 50, in which the said portion (66) which extends outside the valve body (42) is in the form of a plunger.

52. Equipment for the preparation of a hot beverage according to claim 50 or 51, in which the said portion (66) which extends outside the valve body (42) comprises a portion having dimensions larger than the dimensions of an opening (68) of the said valve body (42) through which the said plug (44) extends.

53. Equipment for the preparation of a hot beverage according to one of claims 50 to 52, in which the said portion (66) which extends outside the valve body (42) is mounted on the said plug (44) through an opening (68) in the said valve body (42).

54. Equipment for the preparation of a hot beverage according to claim 53, in which the said portion (66) extending outside the valve body (42) is screwed to the said plug (44).

55. Equipment for the preparation of a hot beverage according to one of the preceding claims, comprising a lid (32) hinged onto the collection container (14) and provided with an opening (36) capable of receiving a portion (66) of the said plug (44).

56. Equipment for the preparation of a hot beverage according to claim 55 when dependent on one of claims 50 to 54, in which the said opening (36) is capable of receiving a portion (66) of the said plug (44) which extends outside the valve body (42).

57. Equipment for the preparation of a hot beverage according to claim 55 or 56, in which the said opening (36) is central on the lid (32) and coaxial with a delivery pipe (28) defining a portion of the said delivery path.

58. Equipment for the preparation of a hot beverage according to one of claims from 55 or 57, in which the said lid (32) comprises a grasping member (38) located in an off-center position on the said lid.

59. Equipment for the preparation of a hot beverage according to claim 58, in which the said grasping member (38) is located between the said opening (36) and a handle (34) of the said equipment.

60. Equipment for the preparation of a hot beverage according to claim 59, in which the said graspable member (38) is located on a protective portion (33) of the lid (32).

61. Method for preparing a hot beverage comprising at least a first liquid component using a coffee-maker (10) comprising a boiler (12) and a collection container (14), the said method comprising the stages of:
providing the coffee-maker with a quantity of the said first liquid component in the boiler (12),
heating the boiler (12) up to a predetermined excess pressure with respect to the atmospheric pressure in which a plug (44) located along a delivery path for the first liquid component from the boiler to the collection container opens the said delivery path,
immobilising the said plug in the position in which the delivery path is open until all the first liquid component and the steam present in the boiler have been delivered,
in which the said plug is immobilised in the said position in which the delivery path is open through the application of a magnetic flux.

62. Method to prepare cappuccino using a coffee-maker (10) comprising a boiler (12), a container for ground coffee (18) and a collection container (14), the said method comprising the stages of:
providing the coffee-maker with a quantity of water in the boiler (12), a quantity of ground coffee in the container for ground coffee (18) and a quantity of milk in the collection container (14) of the coffee-maker,
heating the boiler (12) up to a predetermined excess pressure with respect to atmospheric pressure in which a plug (44) located along a delivery path for the coffee infusion from the boiler to the collection container opens the said delivery path,
immobilising the said plug in the position in which the delivery path is open until all the coffee infusion and the steam present in the boiler is delivered,
in which the said plug is immobilised in the said position in which the delivery path is open through the application of a magnetic flux.

63. Method to foam milk using a coffee-maker (10) comprising a boiler (12) and a collection container (14), the said method comprising the stages of:
providing the coffee-maker with a quantity of water in the boiler (12) and a quantity of milk in the collection container (14) of the coffee-maker,
heating the boiler to a predetermined excess pressure with respect to atmospheric pressure in which a plug (44) located along a delivery path for water from the boiler to the collection container opens the said delivery path, immobilising the said plug (44) in a position in which the delivery path is open until all the water and the steam present in the boiler is delivered,
in which the said plug is immobilised in the said position in which the delivery path is open through the application of a magnetic flux.

64. Method for selectively obtaining a coffee infusion with or without foam using a coffee-maker (10) comprising a boiler (12), a container (18) for the coffee powder, a collection container (14) for the coffee infusion, the said method comprising the stages of:
providing the coffee-maker with a quantity of water in the boiler and a quantity of ground coffee in the container for ground coffee,
setting the position of a plug located along a delivery path for water from the boiler to the collection container between a position in which the delivery path is closed and one which it is open, in which the plug is capable of being immobilised in the position in which the delivery pipe is open through magnetic attraction or repulsion.
heating the boiler to an excess pressure with respect to atmospheric pressure in order to deliver a coffee infusion with or without foam depending upon the set position of the plug.

## Patentansprüche

1. Gerät zur Zubereitung eines Heißgetränks,
einen Kocher (12), der zur Aufnahme einer Flüssigkeitskomponente des Getränks ausgelegt ist, einen Aufnahmebehälter (14) und Mittel (20, 21, 28) zur Definition eines Zuführungswegs der Flüssigkeitskomponente vom Kocher in den Aufnahmebehälter umfassend,
wobei das Gerät auch Ventilmittel (40) umfasst, die sich am Zuführungsweg für die Flüssigkeitskomponente mit einem Verschlussstück (44) befinden, das zwischen einer Position bewegbar ist, in der der Zuführungsweg geschlossen ist, und einer Position, in der er geöffnet ist, und Mittel (70, 72; 70, 96) zum Fixieren des Verschlussstücks in der offenen Position, in der die Mittel zum Fixieren des Verschlussstücks (44) zumindest ein Paar von Elementen (70, 72; 70, 96) umfassen, die magnetisch miteinander interagieren können.

2. Gerät zur Zubereitung eines Heißgetränks gemäß Anspruch 1, wobei die Elemente des Paars einander durch Magnetkraft anziehen können.

3. Gerät zur Zubereitung eines Heißgetränks gemäß Anspruch 1 oder 2, wobei ein Element (70) des Elementpaars mit dem Verschlussstück (44) verbunden ist oder das Verschlussstück bildet, und das andere Element des Elementpaars mit einem festen Teil des Geräts verbunden ist.

4. Gerät zur Zubereitung eines Heißgetränks gemäß Anspruch 3, in dem das andere Element (72; 96) des Elementpaars mit einem Ventilkörper (42) verbunden ist, in dem das Verschlussstück sitzt.

5. Gerät zur Zubereitung eines Heißgetränks gemäß Anspruch 4, wobei das andere Element (72, 96) des Elementpaars an einer Kappe (54) des Ventilkörpers angebracht ist.

6. Gerät zur Zubereitung eines Heißgetränks gemäß Anspruch 4 oder 5, wobei sich zumindest ein Paar der Elemente (70, 72; 70, 96) im Ventilkörper (42) befindet.

7. Gerät zur Zubereitung eines Heißgetränks gemäß Anspruch 3, wobei ein Element (70) des Elementpaars mit dem Verschlussstück (44) verbunden ist, und das andere Element (72, 96) des Elementpaars mit einem Teil des Aufnahmebehälters (14) verbunden ist.

8. Gerät zur Zubereitung eines Heißgetränks gemäß Anspruch 7, wobei das andere Element (72, 96) des Elementpaars mit einem Deckel (32) des Aufnahmebehälters (14) verbunden ist.

9. Gerät zur Zubereitung eines Heißgetränks gemäß Anspruch 7 oder 8, wobei das Element (70) des Elementpaars, das mit dem Verschlussstück (44) verbunden ist, mit einem Teilstück (66) verbunden ist, das sich außerhalb eines Ventilkörpers (42) erstreckt, in dem das Verschlussstück (44) sitzt.

10. Gerät zur Zubereitung eines Heißgetränks gemäß einem der vorhergehenden Ansprüche, wobei das Fixiermittel zumindest zwei Paare von Elementen (70, 72) umfasst, die in der Lage sind, miteinander zu interagieren.

11. Gerät zur Zubereitung eines Heißgetränks gemäß einem der vorhergehenden Ansprüche, wobei das Fixiermittel zumindest drei Paare von Elementen (70, 72) umfasst, die in der Lage sind, magnetisch miteinander zu interagieren, wobei sie etwa 120° voneinander beabstandet sind.

12. Gerät zur Zubereitung eines Heißgetränks gemäß einem der vorhergehenden Ansprüche, wobei das Fixiermittel zumindest ein Paar von Elementen (70, 72; 70, 76) umfasst, die in der Lage sind, aufeinander magnetische Anziehung oder Abstoßung entlang einer vertikalen Richtung in der Position auszuüben, in der das Gerät verwendet wird.

13. Gerät (10) zur Zubereitung eines Heißgetränks gemäß einem der vorhergehenden Ansprüche, wobei die Mittel zur Fixierung des Verschlussstücks so angeordnet sind, dass zumindest eines der Elemente, die das Paar bilden, die Form eines Rings aufweist.

14. Gerät (10) zur Zubereitung eines Heißgetränks gemäß Anspruch 13, wobei der Ring ein Element ist, das zumindest von zwei Paaren von Elementen gemeinsam genutzt wird.

15. Gerät (10) zur Zubereitung eines Heißgetränks gemäß einem der vorhergehenden Ansprüche, wobei die Mittel zur Fixierung des Verschlussstücks so angeordnet sind, dass sie durch eine Kraft aktiviert und deaktiviert werden können, die entlang der Bewegungsrichtung des Verschlussstücks ausgeübt wird.

16. Gerät (10) zur Zubereitung eine Heißgetränks gemäß Anspruch 15, wobei die Mittel durch die Bewegung des Verschlussstücks zwischen der geschlossenen Position und der offenen Position aktiviert werden können.

17. Gerät zur Zubereitung eines Heißgetränks gemäß Anspruch 15 oder 16, wobei das Verschlussstück sich in eine Richtung bewegen kann, die mit der Schwerkraft zusammenfällt.

18. Gerät zur Zubereitung eines Heißgetränks gemäß einem der vorhergehenden Ansprüche, wobei der Zuführungsweg zumindest teilweise durch ein Zuführungsrohr (28) definiert ist, das sich in den Aufnahmebehälter (14) leert und Ventilmittel (40) sich am Auslass des Zuführungsrohrs (28) befinden.

19. Gerät zu Zubereitung eines Heißgetränks gemäß Anspruch 18, wobei das Zuführungsrohr (28) sich zumindest teilweise in den Aufnahmebehälter (14) entlang einer Achse (X) erstreckt, und in dem sich Ventilmittel (40) am Auslass des Zuführungsrohrs (28) in einer Erweiterung des Zugangs (X) befinden.

20. Gerät zur Zubereitung eines Heißgetränks gemäß Anspruch 19, wobei sich das Verschlussstück (44) entlang der Achse (X) bewegen kann.

21. Gerät zur Zubereitung eines Heißgetränks gemäß einem der Ansprüche 18 bis 20, wobei die Ventilmittel (40) einen Ventilkörper (42) umfassen, in dem das Verschlussstück (40) sitzt, das mit einem Einlass (46), der in Verbindung mit dem Auslass des Zuführungswegs angeordnet werden kann, und mit einem Auslass (48), der in Verbindung mit dem Aufnahmebehälter (14) angeordnet werden kann, versehen ist.

22. Gerät zur Zubereitung eines Heißgetränks gemäß Anspruch 21, wobei sich die Fixierungsmittel im Ventilkörper (42) befinden.

23. Gerät zur Zubereitung eines Heißgetränks gemäß Anspruch 21 oder 22, wobei der Einlass (46) des Ventilkörpers (42) axial zum Zuführungsrohr (28) angeordnet ist.

24. Gerät zur Zubereitung eines Heißgetränks gemäß Anspruch 23, wobei der Auslass (48) des Ventilkörpers (42) lateral am Einlass (46) bezüglich der Achse (X) des Zuführungsrohrs (28) angeordnet ist.

25. Gerät zur Zubereitung eines Heißgetränks gemäß einem der Ansprüche 21 bis 24, wobei das Zuführungsrohr (28) eine Erweiterung im Aufnahmebehälter (14) dergestalt aufweist, um den Einlass (46) des Ventilkörpers (42) über der leeren Fläche des Heißgetränks zu halten, das sich im Aufnahmebehälter (14) befindet.

26. Gerät zur Zubereitung eines Heißgetränks gemäß Anspruch 25, wobei der Auslass (48) des Ventilkörpers (42) niedriger angeordnet ist als der Einlass (46) des Ventilkörpers (42).

27. Gerät zur Zubereitung eines Heißgetränks gemäß Anspruch 26, wobei der Ventilkörper (42) mindestens ein Rohr (56) mit einem freien Ende umfasst, das den Auslass (48) des Ventilkörpers (42) definiert.

28. Gerät zur Zubereitung eines Heißgetränks gemäß Anspruch 27, wobei sich das Rohr (56) von einem Ende des Ventilkörpers (42) nach unten erstreckt.

29. Gerät zur Zubereitung eines Heißgetränks gemäß Anspruch 28, wobei die vollständige Erstreckung des Rohrs (56) unterhalb des Einlasses (46) des Ventilkörpers (42) liegt.

30. Gerät zur Zubereitung eines Heißgetränks gemäß Anspruch 27, wobei sich das Rohr (56) seitlich zum Ventilkörper (42) erstreckt.

31. Gerät zur Zubereitung eines Heißgetränks gemäß einem der Ansprüche 27 bis 30, wobei das Rohr (56) bewegbar am Ventilkörper (42) angebracht ist.

32. Gerät zur Zubereitung eines Heißgetränks gemäß einem der Ansprüche 27 bis 30, wobei das Rohr (56) ein Stück mit dem Ventilkörper (42) bildet.

33. Gerät zur Zubereitung eines Heißgetränks gemäß einem der Ansprüche 27 bis 32, wobei das Rohr (56) gerade ist.

34. Gerät zur Zubereitung eines Heißgetränks gemäß einem der Ansprüche 27 bis 33, wobei das Rohr (56) ein Endstück (58) besitzt, das bezüglich des Anschlussteils (60) des Rohrs (56) am Ventilkörper (42) schräg verläuft.

35. Gerät zur Zubereitung eines Heißgetränks gemäß einem der Ansprüche 27 bis 34, wobei zumindest ein Rohr (56) zumindest ein Teil (58) parallel zur Achse (X) des Zuführungsrohrs (28) enthält.

36. Gerät zur Zubereitung eines Heißgetränks gemäß Anspruch 35, wobei das Rohr (56) ein Endteil (58) umfasst, das bezüglich der Richtung der Achse (X) schräg verläuft.

37. Gerät zur Zubereitung eines Heißgetränks gemäß Anspruch 36, wobei das Endteil (58) des Rohrs (56) in tangentialer Richtung zum Umfang, der mittig zur Achse (X) liegt, schräg verläuft.

38. Gerät zur Zubereitung eines Heißgetränks gemäß einem der Ansprüche 27 bis 37, wobei das Rohr eine Düse (88) umfasst, die sich am Auslass (48) befindet, und einen Durchführungs-Querschnitt definiert, der kleiner ist als der Durchführungs-Querschnitt des Rohrs (56).

39. Gerät zur Zubereitung eines Heißgetränks gemäß einem der Ansprüche 21 bis 38, wobei der Ventilkörper (42) ein Mittel umfasst, um zu verhindern, dass das Getränk wieder in den Kocher zurückgesogen wird.

40. Gerät zur Zubereitung eines Heißgetränks gemäß Anspruch 39, wobei das Mittel zum Verhindern, dass das Getränk in den Kocher zurückgesogen wird, Ventilmittel umfasst.

41. Gerät zur Zubereitung eines Heißgetränks gemäß Anspruch 40, wobei das Ventilmittel eine Kapillaröffnung (62) umfasst.

42. Gerät zur Zubereitung eines Heißgetränks gemäß Anspruch 41, abhängig von einem der Ansprüche 27 bis 38, in denen die Kapillaröffnung (62) in dem Rohr (56) auf einem Niveau angelegt ist, das über dem Niveau des Heißgetränks im Aufnahmebehälter (14) bleiben kann.

43. Gerät zur Zubereitung eines Heißgetränks gemäß einem der Ansprüche 21 bis 42, wobei der Ventilkörper (42), in dem die Abdeckkappe (44) sitzt, bewegbar am Zuführungsrohr (28) angebracht ist.

44. Gerät zur Zubereitung eines Heißgetränks gemäß Anspruch 43, wobei der Sitz (50) des Ventilkörpers (42) bewegbar am Zuführungsrohr (28) angebracht ist und eine Kappe (54) bewegbar am Sitz (50) angebracht ist.

45. Gerät zur Zubereitung eines Heißgetränks gemäß Anspruch 43 oder 44, wobei die Kappe (54) eine Bajonettverbindung zum Zufiihrungsrohr umfasst.

46. Gerät zur Zubereitung eines Heißgetränks gemäß Anspruch 45, in dem sich die Bajonettverbindung zwischen dem Zuführungsrohr (28) und einem ringförmigen Teil (84) der Kappe (54) befindet, die ein Endteil des Zuführungsrohrs (28) extern umfassen kann.

47. Gerät zur Zubereitung eines Heißgetränks gemäß Anspruch 45 oder 46, in dem die Bajonettverbindung eine Nut (87a) in der Kappe (54) umfasst, die einen Steg (87) durch eine Durchführung (87b) aufnehmen kann, wobei der Steg aus einem Stück mit dem Zuführungsrohr (28) gefertigt ist.

48. Gerät zur Zubereitung eines Heißgetränks gemäß Anspruch 47, wobei die Bajonettverbindung eine Führung und einen Fixierring (86) umfasst, der zwischen dem Sitz (50) und dem Zuführungsrohr (28) eingefügt ist, wobei die Führung und der Fixierring (86) den Steg (87) umfassen.

49. Gerät zur Zubereitung eines Heißgetränks gemäß einem der vorhergehenden Ansprüche, wobei die Mittel zur Fixierung des Verschlussstücks dergestalt angeordnet sind, dass sie durch direktes Ausüben einer Kraft auf die Kappe deaktiviert werden können, wodurch sie in die geschlossene Position zurückkehren können.

50. Gerät zur Zubereitung eines Heißgetränks gemäß einem der vorhergehenden Ansprüche, wobei die Ventilmittel (14) einen Ventilkörper (42) umfassen, in dem das Verschlussstück (40) mit einem Einlass (46), der in Verbindung mit dem Auslass des Zuführungswegs angeordnet werden kann, und der Auslass (48), der in Verbindung mit dem Aufnahmebehälter (14) angeordnet werden kann, sitzen, und wobei das Verschlussstück (44) ein Teilstück (66) umfasst, das sich außerhalb des Ventilkörpers (42) erstreckt.

51. Gerät zur Zubereitung eines Heißgetränks gemäß Anspruch 50, wobei das Teilstück (66), das sich außerhalb des Ventilkörpers (42) erstreckt, die Form einer Saugglocke hat.

52. Gerät zur Zubereitung eines Heißgetränks gemäß Anspruch 50 oder 51, wobei das Teilstück (66), das sich außerhalb des Ventilkörpers (42) erstreckt, ein Teilstück umfasst, das größere Abmessungen aufweist als die Abmessungen der Öffnung (68) des Ventilkörpers (42), durch den sich das Verschlussstück (44) erstreckt.

53. Gerät zur Zubereitung eines Heißgetränks gemäß einem der Ansprüche 50 bis 52, wobei das Teilstück (66), das sich außerhalb des Ventilkörpers (42) erstreckt, an das Verschlussstück (44) durch eine Öffnung (68) im Ventilkörper (42) angebracht ist.

54. Gerät zur Zubereitung eines Heißgetränks gemäß Anspruch 53, wobei sich das Teilstück (66), das sich außerhalb des Ventilkörpers (42) erstreckt, an das Verschlussstück (44) angeschraubt ist.

55. Gerät zur Zubereitung eines Heißgetränks gemäß einem der vorhergehenden Ansprüche, einen Deckel (32) umfassend, der gelenkig an dem Aufnahmebehälter (14) angebracht ist und mit einer Öffnung (36) versehen ist, die ein Teilstück (66) des Verschlussstücks (44) aufnehmen kann.

56. Gerät zur Zubereitung eines Heißgetränks gemäß Anspruch 55, abhängig von einem der Ansprüche 50 bis 54, wobei die Öffnung (36) ein Teilstück (66) des Verschlussstücks (44) aufnehmen kann, das sich außerhalb des Ventilkörpers (42) erstreckt.

57. Gerät zur Zubereitung eines Heißgetränks gemäß Anspruch 55 oder 56, wobei die Öffnung (36) mittig am Deckel (32) und koaxial zu einem Zuführungsrohr (28) angeordnet ist, das einen Teil des Zuführungswegs definiert.

58. Gerät zur Zubereitung eine Heißgetränks gemäß einem der Ansprüche 55 bis 57, wobei der Deckel (32) ein Greifelement (38) umfasst, das sich an einer Position außerhalb der Mitte des Deckels befindet.

59. Gerät zur Zubereitung eines Heißgetränks gemäß Anspruch 58, wobei das Greifelement (38) sich zwischen der Öffnung (36) und einem Griff (34) des Geräts befindet.

60. Gerät zur Zubereitung eines Heißgetränks gemäß Anspruch 59, wobei sich das Greifelement (38) auf einem Schutzteil (33) des Deckels (32) befindet.

61. Verfahren zur Zubereitung eines Heißgetränks, mindestens eine erste Flüssigkeitskomponente umfassend, mit einer Kaffeemaschine (10) mit einem Kocher (12) und einem Aufnahmebehälter (14), wobei das Verfahren die Stufen umfasst:
Befüllen der Kaffeemaschine mit einer Menge der ersten Flüssigkeitskomponente in den Kocher (12),
Erhitzen des Kochers (12) bis zu einem vorab festgelegten Überdruck im Vergleich zum Luftdruck, wobei das Verschlussstück (44), das sich an einem Zuführungsweg für die erste Flüssigkeitskomponente aus dem Kocher in den Aufnahmebehälter befindet, den Zuführungsweg öffnet,
Fixieren des Verschlussstücks in der Position, in der der Zuführungsweg offen ist, bis die gesamte erste Flüssigkeitskomponente und der im Kocher vorhandene Dampf zugeleitet wurden,
wobei das Verschlussstück in der Position fixiert wird, in der der Zuführungsweg durch die Anwendung von magnetischem Fluss geöffnet ist.

62. Verfahren zur Zubereitung von Cappuccino mit einer Kaffeemaschine (10), die einen Kocher (12), einen Aufnahmebehälter (18) für gemahlenen Kaffe und einen Aufnahmebehälter (14) umfasst, wobei das Verfahren die Stufen umfasst:
Befüllen der Kaffeemaschine mit einer Menge Wasser in den Kocher (12), mit einer Menge gemahlenem Kaffee in den Behälter für gemahlenen Kaffee (18) und mit einer Menge Milch in den Aufnahmebehälter (14) der Kaffeemaschine,
Erhitzen des Kochers (12) bis zu einem vorab festgelegten Überdruck im Vergleich zum Luftdruck, wobei das Verschlussstück (44), das sich an einem Zuführungsweg für den Kaffeeaufguss aus dem Kocher in den Aufnahmebehälter befindet, den Zuführungsweg öffnet,
Fixieren des Verschlussstücks in der Position, in der der Zuführungsweg offen ist, bis der gesamte Kaffeeaufguss und der im Kocher vorhandene Dampf zugeleitet wurden, wobei das Verschlussstück in der Position fixiert wird, in der der Zuführungsweg durch die Anwendung von magnetischem Fluss geöffnet ist.

63. Verfahren zum Aufschäumen von Milch unter Verwendung einer Kaffeemaschine (10) mit einem Kocher (12) und einen Aufnahmebehälter (14), wobei das Verfahren die Stufen umfasst:
Befüllen der Kaffeemaschine mit einer Menge Wasser im Kocher (12), und einer Menge Milch im Aufnahmebehälter (14) der Kaffeemaschine,
Erhitzen des Kochers (12) bis zu einem vorab festgelegten Überdruck im Vergleich zum Luftdruck, wobei das Verschlussstück (44), das sich entlang eines Zuführungswegs für Wasser aus dem Kocher in den Aufnahmebehälter befindet, den Zuführungsweg öffnet,
Fixieren des Verschlussstücks (44) in der Position, in der der Zuführungsweg offen ist, bis alles Wasser und der im Kocher vorhandene Dampf zugeleitet wurden,
wobei das Verschlussstück in der Position fixiert wird, in der der Zuführungsweg durch die Anwendung von magnetischem Fluss geöffnet ist.

64. Verfahren zum selektiven Bezug eines Kaffeeaufgusses mit oder ohne Schaum mit einer Kaffeemaschine (10) mit einem Kocher (12), einem Behälter (18) für das Kaffeepulver und einem Aufnahmebehälter (14) für den Kaffeeaufguss, wobei das Verfahren die Stufen umfasst:
Befüllen der Kaffeemaschine mit einer Wassermenge im Kocher und einer Menge gemahlenem Kaffe in den Behälter für gemahlenen Kaffee,
wobei die Position eines Verschlussstücks eingestellt wird, das sich an einem Zuführungsweg für Wasser aus dem Kocher an den Aufnahmebehälter befindet, zwischen einer Position, in der der Zuführungsweg geschlossen ist, und einer Position, in der der Zuführungsweg offen ist,
wobei das Verschlussstück in der Position fixiert werden kann, in der das Zuführungsrohr durch magnetische Anziehung oder Abstoßung offen ist,
Erhitzen des Kochers auf einen Überdruck im Vergleich zum Luftdruck, um einen Kaffeeaufguss mit oder ohne Schaum, je nach der eingestellten Position des Verschlussstücks, zu erhalten.

## Revendications

1. Equipement destiné à la préparation d'une boisson chaude, comprenant une bouilloire (12) conçue pour recevoir un composant liquide de ladite boisson, un récipient de recueil (14) et un moyen (20, 21, 28) destiné à définir une voie de délivrance pour ledit composant liquide allant de la bouilloire au récipient de recueil,
ledit équipement comprenant également un moyen de soupape (40) situé sur la voie de délivrance pour ledit composant liquide comprenant un bouchon (44) qui peut se déplacer entre une position à laquelle la voie de délivrance est fermée et une position à laquelle il est ouvert et des moyens (70, 72 ; 70, 96) destinés à immobiliser le bouchon dans la position ouverte,
dans lequel lesdits moyens destinés à immobiliser le bouchon (44) comprennent au moins une paire d'éléments (70, 72 ; 70, 96) qui peuvent interagir de façon magnétique l'un avec l'autre.

2. Equipement destiné à la préparation d'une boisson chaude selon la revendication 1, dans lequel lesdits éléments de ladite paire peuvent s'attirer l'un l'autre par le biais d'une force magnétique.

3. Equipement destiné à la préparation d'une boisson chaude selon la revendication 1 ou 2, dans lequel un élément (70) de ladite paire d'éléments est associé au bouchon (44), ou est le bouchon lui-même, et l'autre élément de ladite paire d'éléments est associé à une partie fixe dudit équipement.

4. Equipement destiné à la préparation d'une boisson chaude selon la revendication 3, dans lequel ledit autre élément (72 ; 96) de ladite paire d'éléments est associé à un corps de soupape (42) logeant ledit bouchon.

5. Equipement destiné à la préparation d'une boisson chaude selon la revendication 4, dans lequel l'autre élément (72 ; 96) de ladite paire d'éléments est monté sur un capuchon (54) dudit corps de soupape.

6. Equipement destiné à la préparation d'une boisson chaude selon la revendication 4 ou 5, dans lequel ladite au moins une paire d'éléments (70, 72 ; 70, 96) est située à l'intérieur du corps de soupape (42).

7. Equipement destiné à la préparation d'une boisson chaude selon la revendication 3, dans lequel un premier élément (70) de ladite paire d'éléments est associé au bouchon (44) et l'autre élément (72 ; 96) de ladite paire d'éléments est associé à une partie du récipient de recueil (14).

8. Equipement destiné à la préparation d'une boisson chaude selon la revendication 7, dans lequel l'autre élément (72 ; 96) de ladite paire d'éléments est associé à un couvercle (32) dudit récipient de recueil (14).

9. Equipement destiné à la préparation d'une boisson chaude selon la revendication 7 ou 8, dans lequel l'élément (70) de ladite paire d'éléments associée au bouchon (44) est associé à une partie (66) qui s'étend à l'extérieur d'un corps de soupape (42) logeant ledit bouchon (44).

10. Equipement destiné à la préparation d'une boisson chaude selon l'une des revendications précédentes, dans lequel lesdits moyens d'immobilisation comprennent au moins deux paires d'éléments (70, 72) pouvant interagir les uns avec les autres.

11. Equipement destiné à la préparation d'une boisson chaude selon l'une des revendications précédentes, dans lequel lesdits moyens d'immobilisation comprennent au moins trois paires d'éléments (70, 72) pouvant interagir de façon magnétique les uns avec les autres, situés approximativement à 120° les uns des autres.

12. Equipement destiné à la préparation d'une boisson chaude selon l'une des revendications précédentes, dans lequel lesdits moyens d'immobilisation comprennent au moins une paire d'éléments (70, 72 ; 70, 96) pouvant interagir les uns avec les autres en exerçant une attraction ou une répulsion magnétique suivant une direction verticale dans la position à laquelle l'équipement est utilisé.

13. Equipement (10) destiné à la préparation d'une boisson chaude selon l'une des revendications précédentes,
dans lequel lesdits moyens destinés à immobiliser le bouchon sont agencés de sorte qu'au moins un desdits éléments formant ladite paire se présente sous la forme d'un anneau.

14. Equipement (10) destiné à la préparation d'une boisson chaude selon la revendication 13, dans lequel ledit anneau est un élément commun à au moins deux paires d'éléments.

15. Equipement (10) destiné à la préparation d'une boisson chaude selon l'une des revendications précédentes,
dans lequel lesdits moyens destinés à immobiliser le bouchon sont agencés de telle sorte qu'ils puissent être activés et désactivés par une force exercée suivant la direction de déplacement du bouchon.

16. Equipement (10) destiné à la préparation d'une boisson chaude selon la revendication 15, dans lequel lesdits moyens peuvent être activés par le déplacement du bouchon entre la position fermée et la position ouverte.

17. Equipement destiné à la préparation d'une boisson chaude selon la revendication 15 ou 16, dans lequel ledit bouchon peut se déplacer dans une direction coïncidant avec la direction de gravité.

18. Equipement destiné à la préparation d'une boisson chaude selon l'une des revendications précédentes, dans lequel ladite voie de délivrance est au moins partiellement définie par un conduit de délivrance (28) remplissant ledit récipient de recueil (14) et ledit moyen de soupape (40) est situé au niveau de l'orifice de sortie dudit conduit de délivrance (28).

19. Equipement destiné à la préparation d'une boisson chaude selon la revendication 18, dans lequel ledit conduit de délivrance (28) s'étend au moins partiellement à l'intérieur du récipient de recueil (14) suivant un axe (X) et dans lequel ledit moyen de soupape (40) est situé au niveau de l'orifice de sortie dudit conduit de délivrance (28) dans le prolongement dudit accès (X).

20. Equipement destiné à la préparation d'une boisson chaude selon la revendication 19, dans lequel ledit bouchon (44) peut se déplacer suivant ledit axe (X).

21. Equipement destiné à la préparation d'une boisson chaude selon l'une des revendications 18 à 20, dans lequel ledit moyen de soupape (40) comprend un corps de soupape (42) dans lequel le bouchon (40) est logé, doté d'un orifice d'entrée (46) pouvant être mis en communication avec l'orifice de sortie de ladite voie de délivrance et un orifice de sortie (48) pouvant être mis en communication avec ledit récipient de recueil (14).

22. Equipement destiné à la préparation d'une boisson chaude selon la revendication 21, dans lequel lesdits moyens d'immobilisation se situent à l'intérieur dudit corps de soupape (42).

23. Equipement destiné à la préparation d'une boisson chaude selon la revendication 21 ou 22, dans lequel ledit orifice d'entrée (46) dudit corps de soupape (42) est axial audit conduit de délivrance (28).

24. Equipement destiné à la préparation d'une boisson chaude selon la revendication 23, dans lequel ledit orifice de sortie (48) du corps de soupape (42) est situé latéralement au niveau de l'orifice d'entrée (46) par rapport audit axe (X) du conduit de délivrance (28).

25. Equipement destiné à la préparation d'une boisson chaude selon l'une des revendications 21 à 24, dans lequel ledit conduit de délivrance (28) présente une extension à l'intérieur du récipient de recueil (14) de façon à maintenir l'orifice d'entrée (46) dudit corps de soupape (42) au-dessus de la surface libre de la boisson chaude présente dans le récipient de recueil (14).

26. Equipement destiné à la préparation d'une boisson chaude selon la revendication 25, dans lequel l'orifice de sortie (48) dudit corps de soupape (42) se situe à un niveau inférieur par rapport à l'orifice d'entrée (46) dudit corps de soupape (42).

27. Equipement destiné à la préparation d'une boisson chaude selon la revendication 26, dans lequel ledit corps de soupape (42) comprend au moins une conduite (56) présentant une extrémité libre définissant ledit orifice de sortie (48) du corps de soupape (42).

28. Equipement destiné à la préparation d'une boisson chaude selon la revendication 27, dans lequel ladite conduite (56) s'étend vers le bas depuis une extrémité dudit corps de soupape (42).

29. Equipement destiné à la préparation d'une boisson chaude selon la revendication 28, dans lequel la longueur totale de ladite conduite (56) se tient en dessous dudit orifice d'entrée (46) du corps de soupape (42).

30. Equipement destiné à la préparation d'une boisson chaude selon la revendication 27, dans lequel ladite conduite (56) s'étend latéralement au corps de soupape (42).

31. Equipement destiné à la préparation d'une boisson chaude selon l'une des revendications 27 à 30, dans lequel ladite conduite (56) est montée de façon amovible sur le corps de soupape (42).

32. Equipement destiné à la préparation d'une boisson chaude selon l'une des revendications 27 à 30, dans lequel ladite conduite (56) constitue une seule pièce avec le corps de soupape (42).

33. Equipement destiné à la préparation d'une boisson chaude selon l'une des revendications 27 à 32, dans lequel ladite conduite (56) est rectiligne.

34. Equipement destiné à la préparation d'une boisson chaude selon l'une des revendications 27 à 33, dans lequel ladite conduite (56) comporte une partie terminale (58) qui est inclinée par rapport à une partie de fixation (60) de ladite conduite (56) au corps de soupape (42).

35. Equipement destiné à la préparation d'une boisson chaude selon l'une des revendications 27 à 34, dans lequel ladite au moins une conduite (56) comprend au moins une partie (58) parallèle audit axe (X) du conduit de délivrance (28).

36. Equipement destiné à la préparation d'une boisson chaude selon la revendication 35, dans lequel ladite conduite (56) comporte une partie terminale (58) qui est inclinée par rapport à la direction dudit axe (X).

37. Equipement destiné à la préparation d'une boisson chaude selon la revendication 36, dans lequel ladite partie terminale (58) de ladite conduite (56) est inclinée dans une direction tangentielle à une circonférence centrée sur ledit axe (X).

38. Equipement destiné à la préparation d'une boisson chaude selon l'une des revendications 27 à 37, dans lequel ladite conduite comprend une buse (88) située au niveau de l'orifice de sortie (48) et définissant une section en coupe de passage qui est inférieure à la section en coupe de passage de la conduite (56).

39. Equipement destiné à la préparation d'une boisson chaude selon l'une des revendications 21 à 38, dans lequel ledit corps de soupape (42) comprend un moyen destiné à empêcher la boisson d'être aspirée en retour à l'intérieur de la bouilloire.

40. Equipement destiné à la préparation d'une boisson chaude selon la revendication 39, dans lequel ledit moyen destiné à empêcher la boisson d'être aspirée en retour à l'intérieur de la bouilloire comprend un moyen d'évent.

41. Equipement destiné à la préparation d'une boisson chaude selon la revendication 40, dans lequel ledit moyen d'évent comprend une ouverture capillaire (62).

42. Equipement destiné à la préparation d'une boisson chaude selon la revendication 41, lorsqu'il dépend de l'une des revendications 27 à 38, dans lequel ladite ouverture capillaire (62) est réalisée dans ladite conduite (56) à un niveau pouvant rester au-dessus du niveau de la boisson chaude présente dans le récipient de recueil (14).

43. Equipement destiné à la préparation d'une boisson chaude selon l'une des revendications 21 à 42, dans lequel ledit corps de soupape (42), dans lequel le bouchon (44) est logé, est monté de façon amovible sur le conduit de délivrance (28).

44. Equipement destiné à la préparation d'une boisson chaude selon la revendication 43, dans lequel un siège (50) du corps de soupape (42) est monté de façon amovible sur le conduit de délivrance (28) et un capuchon (54) est monté de façon amovible sur ledit siège (50).

45. Equipement destiné à la préparation d'une boisson chaude selon la revendication 43 ou 44, dans lequel ledit capuchon (54) comprend un raccord à baïonnette avec ledit conduit de délivrance.

46. Equipement destiné à la préparation d'une boisson chaude selon la revendication 45, dans lequel ledit raccord à baïonnette est situé entre ledit conduit de délivrance (28) et une partie annulaire (84) dudit capuchon (54) pouvant enfermer de façon externe une partie d'extrémité du conduit de délivrance (28).

47. Equipement destiné à la préparation d'une boisson chaude selon la revendication 45 ou 46, dans lequel ledit raccord à baïonnette comprend une rainure (87a) dans ledit capuchon (54) pouvant recevoir une dent (87) au travers d'un passage (87b), ladite dent constituant une seule pièce avec le conduit de délivrance (28).

48. Equipement destiné à la préparation d'une boisson chaude selon la revendication 47, dans lequel ledit raccord à baïonnette comprend un guide et un anneau d'immobilisation (86) insérés entre le siège (50) et le conduit de délivrance (28), lesdits guide et anneau d'immobilisation (86) comprenant ladite dent (87).

49. Equipement destiné à la préparation d'une boisson chaude selon l'une des revendications précédentes, dans lequel lesdits moyens destinés à immobiliser le bouchon sont agencés de telle sorte qu'ils peuvent être désactivés en exerçant une force directement sur ledit bouchon, pouvant le faire retourner à la position fermée.

50. Equipement destiné à la préparation d'une boisson chaude selon l'une des revendications précédentes, dans lequel ledit moyen de soupape (14), comprenant un corps de soupape (42) dans lequel le bouchon (44) doté d'un orifice d'entrée (46) pouvant être mis en communication avec l'orifice de sortie de ladite voie de délivrance et d'un orifice de sortie (48) pouvant être mis en communication avec ledit récipient de recueil (14), est logé et dans lequel ledit bouchon (44) comprend une partie (66) qui s'étend vers l'extérieur du corps de soupape (42).

51. Equipement destiné à la préparation d'une boisson chaude selon la revendication 50, dans lequel ladite partie (66), qui s'étend à l'extérieur du corps de soupape (42), se présente sous la forme d'un élément plongeur.

52. Equipement destiné à la préparation d'une boisson chaude selon la revendication 50 ou 51, dans lequel ladite partie (66) qui s'étend à l'extérieur du corps de soupape (42) comprend une partie ayant des dimensions supérieures aux dimensions d'une ouverture (68) dudit corps de soupape (42) au travers de laquelle ledit bouchon (44) s'étend.

53. Equipement destiné à la préparation d'une boisson chaude selon l'une des revendications 50 à 52, dans lequel ladite partie (66) qui s'étend à l'extérieur du corps de soupape (42) est montée sur ledit bouchon (44) au travers d'une ouverture (68) dans ledit corps de soupape (42).

54. Equipement destiné à la préparation d'une boisson chaude selon la revendication 53, dans lequel ladite partie (66) s'étendant à l'extérieur du corps de soupape (42) est vissée audit bouchon (44).

55. Equipement destiné à la préparation d'une boisson chaude selon l'une des revendications précédentes, comprenant un couvercle (32) articulé sur le récipient de recueil (14) et doté d'une ouverture (36) pouvant recevoir une partie (66) dudit bouchon (44).

56. Equipement destiné à la préparation d'une boisson chaude selon la revendication 55, lorsqu'il dépend de l'une des revendications 50 à 54, dans lequel ladite ouverture (36) peut recevoir une partie (66) dudit bouchon (44) qui s'étend vers l'extérieur du corps de soupape (42).

57. Equipement destiné à la préparation d'une boisson chaude selon la revendication 55 ou 56, dans lequel ladite ouverture (36) est centrale sur le couvercle (32) et coaxiale avec un conduit de délivrance (28) définissant une partie de ladite voie de délivrance.

58. Equipement destiné à la préparation d'une boisson chaude selon l'une des revendications 55 ou 57, dans lequel ledit couvercle (32) comprend un élément de préhension (38) situé dans une position décentrée sur ledit couvercle.

59. Equipement destiné à la préparation d'une boisson chaude selon la revendication 58, dans lequel ledit élément de préhension (38) est situé entre ladite ouverture (36) et une poignée (34) dudit équipement.

60. Equipement destiné à la préparation d'une boisson chaude selon la revendication 59, dans lequel ledit élément de préhension (38) est situé sur une partie de protection (33) du couvercle (32).

61. Procédé destiné à préparer une boisson chaude comprenant au moins un premier composant liquide, utilisant une cafetière (10) comprenant une bouilloire (12) et un récipient de recueil (14), ledit procédé comprenant les étapes consistant à :
alimenter la cafetière d'une quantité dudit premier composant liquide dans la bouilloire (12),
chauffer la bouilloire (12) jusqu'à une pression excessive prédéterminée par rapport à la pression atmosphérique, dans laquelle un bouchon (44) situé sur une voie de délivrance pour le premier composant liquide allant de la bouilloire au récipient de recueil ouvre ladite voie de délivrance,
immobiliser ledit bouchon dans la position à laquelle la voie de délivrance est ouverte jusqu'à ce que la totalité du premier composant liquide et de la vapeur présents dans la bouilloire soit délivrée,
dans lequel ledit bouchon est immobilisé dans ladite position à laquelle la voie de délivrance est ouverte par l'intermédiaire de l'application d'un flux magnétique.

62. Procédé destiné à préparer un cappuccino en utilisant une cafetière (10) comprenant une bouilloire (12), un récipient destiné à du café moulu (18) et un récipient de recueil (14), ledit procédé comprenant les étapes consistant à :
alimenter la cafetière d'une quantité d'eau dans la bouilloire (12), d'une quantité de café moulu dans le récipient destiné à du café moulu (18) et d'une quantité de lait dans le récipient de recueil (14) de la cafetière,
chauffer la bouilloire (12) jusqu'à une pression excessive prédéterminée par rapport à la pression atmosphérique, dans laquelle un bouchon (44) situé sur une voie de délivrance pour l'infusion de café allant de la bouilloire au récipient de recueil ouvre ladite voie de délivrance,
immobiliser ledit bouchon à la position à laquelle la voie de délivrance est ouverte jusqu'à ce que la totalité de l'infusion de café et de la vapeur présentes dans la bouilloire soit délivrée,
dans lequel ledit bouchon est immobilisé dans ladite position à laquelle la voie de délivrance est ouverte par l'intermédiaire de l'application d'un flux magnétique.

63. Procédé destiné à faire mousser du lait en utilisant une cafetière (10) comprenant une bouilloire (12) et un récipient de recueil (14), ledit procédé comprenant les étapes consistant à :
alimenter la cafetière d'une quantité d'eau dans la bouilloire (12) et d'une quantité de lait dans le récipient de recueil (14) de la cafetière,
chauffer la bouilloire (12) jusqu'à une pression excessive prédéterminée par rapport à la pression atmosphérique, dans laquelle un bouchon (44) situé sur une voie de délivrance pour de l'eau allant de la bouilloire au récipient de recueil ouvre ladite voie de délivrance,
immobiliser ledit bouchon (44) à la position à laquelle la voie de délivrance est ouverte jusqu'à ce que la totalité de l'eau et de la vapeur présentes dans la bouilloire soit délivrée,
dans lequel ledit bouchon est immobilisé dans ladite position à laquelle la voie de délivrance est ouverte par l'intermédiaire de l'application d'un flux magnétique.

64. Procédé destiné à obtenir sélectivement une infusion de café avec ou sans mousse en utilisant une cafetière (10) comprenant une bouilloire (12), un récipient (18) destiné à du café en poudre, un récipient de recueil (14) destiné à l'infusion de café, ledit procédé comprenant les étapes consistant à :
alimenter la cafetière d'une quantité d'eau dans la bouilloire (12) et d'une quantité de café moulu dans le récipient destiné à du café moulu,
établir la position d'un bouchon situé sur une voie de délivrance pour de l'eau allant de la bouilloire au récipient de recueil entre une position à laquelle la voie de délivrance est fermée et une position à laquelle elle est ouverte, où le bouchon peut être immobilisé dans la position à laquelle le conduit de délivrance est ouvert par l'intermédiaire d'une attraction ou d'une répulsion magnétique,
chauffer la bouilloire (12) jusqu'à une pression excessive par rapport à la pression atmosphérique, afin de délivrer une infusion de café avec ou sans mousse en fonction de la position établie du bouchon.
